# EUROPEAN PATENT APPLICATION

(11) **EP 4 730 877 A1**
(43) Date of publication of application: **22.04.2026**
(21) Application number: 24822777.9
(22) Date of filing: 14.06.2024
(51) Int. Cl.: H04W 52/14

(54) **METHOD AND APPARATUS USED IN NODE FOR WIRELESS COMMUNICATION**

(30) Priority: 16.06.2023 CN 202310721439
(71) Applicant: Apogee Networks, LLC, Plano, TX 75024 (US)
(72) Inventor: JIANG, Qi, Shanghai 201206 (CN); WANG, Ping, Shanghai 201206 (CN); ZHANG, Xiaobo, Shanghai 201206 (CN)
(74) Representative: Gunzelmann, Rainer
(86) International application number: PCT/CN2024/099149
(87) International publication number: WO 2024/255829

(57) **Abstract**

The present application discloses a method and apparatus used in a node for wireless communication. A first node receives target signaling and first signaling; the target signaling indicates a first symbol set, and the first signaling comprises a first domain, the first domain of the first signaling indicating at least one reference signal resource and a first power value, and the first power value being one of a first candidate power value and a second candidate power value; the first node sends a first signal in the first symbol set, the sending power of the first signal depending on the first power value, the first signal having a spatial relationship with the at least one reference signal resource, and whether the first power value is the first candidate power value or the second candidate power value depending on whether the first symbol set is for downlink. The present application improves uplink transmission power control in a full-duplex scenario, improving uplink transmission performance, and improving system flexibility and adaptability.

## Description

### Technical Field

The present application relates to a transmission method and apparatus in a wireless communication system, in particular to a transmission method and apparatus for wireless signals in a wireless communication system supporting a cellular network.

### Background Art

Application scenarios of wireless communication systems in the future will become more and more diversified, and different application scenarios put forward different performance requirements for the systems. In order to meet different performance needs of various application scenarios, the 3rd Generation Partner Project (3GPP) Radio Access Network (RAN) #72 plenary meeting decided to research the New Radio (NR) technology (or 5G), a Work Item (WI) of the NR technology was passed on the 3GPP RAN #75 plenary meeting, and standardization work on NR was started.

In an existing NR system, spectrum resources are statically divided into a Frequency Division Duplexing (FDD) spectrum and a Time Division Duplexing (TDD) spectrum. For the TDD spectrum, both a base station and User Equipment (UE) operate in a half-duplex mode. This half-duplex mode avoids a self-interference and can alleviate the impact of a Cross-Link Interference (CLI), but also brings about a decrease in resource utilization rate, an increase in latency and other problems. In response to these problems, supporting a flexible duplex mode or a variable link direction (uplink or downlink or flexible) on the TDD spectrum or the FDD spectrum becomes a possible solution. In the 3GPP RAN #88e meeting and the 3GPP Release-18 (Rel-18, version 18) workshop, supporting the more flexible duplex mode or a full-duplex mode in NR Rel-18 received extensive attention and discussion, especially a SubBand non-overlapping Full Duplex (SBFD) mode at a gNB (NR node B) side. Communication under this mode will suffer from serious interferences, including the self-interference and the CLI. To solve the interference problem, advanced interference cancellation techniques are required to be used, including antenna isolation, beamforming, Radio Frequency (RF) level interference cancellation and digital interference cancellation.

### Summary of the Invention

In an SBFD scenario, an interference environment can vary significantly between SBFD symbols and non-SBFD symbols, and interference sources are also different. In the non-SBFD symbols, when a base station receives uplink transmission from a terminal, the interference mainly comes from uplink transmission of other terminals; and in the SBFD symbols, the uplink reception at the base station, in addition to interferences from uplink transmission of other terminals, is also subject to interferences from signals of downlink transmission of the base station, and such interferences may come from the same cell, different cells in the same network, or cells of other base stations, etc. Therefore, enhancing the power control of uplink transmission in the SBFD scenario to address the interference environment that varies significantly between the SBFD symbols and the non-SBFD symbols is a topic worthy of study.

In view of the above problem, the present application discloses a solution. It should be noted that although the original intention of the present application is directed to the SBFD scenario, the present application can also be applied to other non-SBFD scenarios. Further, the use of a unified design scheme for different scenarios (such as other non-SBFD scenarios, including but not limited to capacity enhancement systems, near field communication systems, unlicensed spectrum communication, Internet of Things (IoT), Ultra Reliable Low Latency Communication (URLLC) networks, Internet of Vehicles, etc.) also facilitates the reduction of hardware complexity and costs. In the absence of conflicts, embodiments and features in the embodiments in any node of the present application can be applied to any other nodes. In the absence of conflicts, the embodiments and features in the embodiments of the present application can be arbitrarily combined with each other.

In particular, the interpretation (if not otherwise specified) of the terminology, nouns, functions, and variables in the present application can refer to the definitions in 3GPP specification protocol TS38 series and TS37 series. If necessary, reference can be made to 3GPP standards TS38.211, TS38.212, TS38.213, TS38.214, TS38.215, TS38.300, TS38.304, TS38.305, TS38.321, TS38.331, TS37.355, and TS38.423 to assist in understanding the present application.

As an embodiment, the interpretations of the terminologies in the present application refer to the definitions of 3GPP specification protocol TS38 series.

As an embodiment, the interpretations of the terminologies in the present application refer to the definitions of 3GPP specification protocol TS37 series.

The present application discloses a method used in a first node for wireless communication, comprising:
receiving target signaling and first signaling, wherein the target signaling indicates a first symbol set; and the first signaling comprises a first field, the first field of the first signaling indicates at least one reference signal resource and a first power value, and the first power value is one of a first candidate power value and a second candidate power value; and
sending a first signal in the first symbol set,
wherein a sending power of the first signal depends on the first power value; the first signal has a spatial relation with the at least one reference signal resource; and whether the first power value is the first candidate power value or the second candidate power value depends on whether the first symbol set is for downlink.

As an embodiment, the problem to be solved by the present application comprises: uplink power control in the SBFD scenario.

As an embodiment, the problem to be solved by the present application comprises: how to determine the sending power of the first signal in the SBFD scenario.

As an embodiment, the problem to be solved by the present application comprises: how to determine the first power value in the uplink power control parameters in the SBFD scenario, wherein the first power value is a P0 value used in uplink power control.

As an embodiment, the characteristics of the above method comprise: the present application solves the above problem by configuring two sets of power control parameters and using different power control parameters by the terminal when performing uplink transmission in SBFD symbols and non-SBFD symbols.

As an embodiment, the characteristics of the above method comprise: the present application solves the above problem by configuring two sets of P0 values and using different P0 values by the terminal when performing uplink transmission in SBFD symbols and non-SBFD symbols.

As an embodiment, the characteristics of the above method comprise: appropriate uplink power control parameters are selected according to different interference environments to ensure that the interference is controllable to make the overall performance of the network more stable and efficient.

As an embodiment, the benefits of the above method comprise: the uplink power control is performed more flexibly and accurately to improve uplink transmission performance.

As an embodiment, the benefits of the above method comprise: in a high-interference environment, configuring a higher P0 value can improve signal transmission quality and coverage range, thereby improving system capacity.

As an embodiment, the benefits of the above method comprise: in a low-interference environment, configuring a lower P0 value can avoid unnecessary interference, improve system efficiency, reduce power consumption, and save energy.

According to one aspect of the present application, the above method is characterized in that the first field of the first signaling indicates a first *SRI-PUSCH-PowerControl,* and the first candidate power value and the second candidate power value are configured by the first *SRI-PUSCH-PowerControl.*

As an embodiment, the characteristics of the above method comprise: the first *SRI-PUSCH-PowerControl* comprises the first candidate power value and the second candidate power value.

As an embodiment, the characteristics of the above method comprise: the first *SRI-PUSCH-PowerControl* is used for indicating the first candidate power value and the second candidate power value.

As an embodiment, the characteristics of the above method comprise: the present application is applicable to uplink transmission based on scheduling requests.

As an embodiment, the benefits of the above method comprise: system resource allocation and power control are effectively optimized, and system transmission efficiency and reliability are improved.

According to one aspect of the present application, the above method is characterized in that the first field of the first signaling indicates a first *P0-PUSCH-SetList,* and the first candidate power value and the second candidate power value are configured by two first-type power parameters in the first *P0-PUSCH-SetList* respectively.

As an embodiment, the characteristics of the above method comprise: the two first-type power parameters correspond to two different power parameter sets, at least one candidate power value can be configured in each parameter set, and the first signaling is used for determining the first candidate power value and the second candidate power value from the at least one candidate power value in each parameter set.

As an embodiment, the characteristics of the above method comprise: the first signaling comprises a third field, and the third field is used for determining the first candidate power value and the second candidate power value.

As an embodiment, the benefits of the above method comprise: good forward compatibility.

As an embodiment, the benefits of the above method comprise: system resource allocation and power control are effectively optimized, and system transmission efficiency and reliability are improved.

According to one aspect of the present application, the above method is characterized in that the first field of the first signaling indicates a first *P0-PUSCH-Set,* and the first candidate power value and the second candidate power value are respectively configured by two second-type power parameters in the first *PC-PUSCH-Set.*

As an embodiment, the characteristics of the above method comprise: the two second-type power parameters correspond to two different candidate power values.

As an embodiment, the characteristics of the above method comprise: the first *P0-PUSCH-Set* comprises at least 2 power control parameters, and the at least 2 power control parameters comprise the first candidate power value and the second candidate power value.

As an embodiment, the characteristics of the above method comprise: the first *P0-PUSCH-Set* comprises 4 power control parameters, and the 4 power control parameters comprise the first candidate power value and the second candidate power value.

As an embodiment, the benefits of the above method comprise: system resource allocation and power control are effectively optimized, and system transmission efficiency and reliability are improved.

According to one aspect of the present application, the above method is characterized by comprising:
receiving second signaling,
wherein the second signaling comprises a second field, the second field of the second signaling indicates a first offset value, the sending power of the first signal depends on the first offset value, and the first offset value depends on whether the first symbol set is for downlink.

As an embodiment, the problem to be solved by the present application comprises: how to determine a first offset value in the uplink power control parameters in the SBFD scenario, wherein the first offset value is used for determining a power control adjustment state in uplink power control.

As an embodiment, the characteristics of the above method comprise: the present application solves the above problem by using different first offset values when a terminal performs uplink transmission in SBFD symbols and non-SBFD symbols.

As an embodiment, the benefits of the above method comprise: the interference environments on the SBFD symbols and the non-SBFD symbols are different, and using different first offset values can more precisely control the adjustment of uplink power in different interference environments, thereby improving system performance.

As an embodiment, the benefits of the above method comprise: it is conducive to appropriately adjusting the uplink transmission power and reducing the delay.

As an embodiment, the benefits of the above method comprise: the fluctuations when the system adjusts power are effectively reduced and the system stability is improved.

According to one aspect of the present application, the above method is characterized in that a first path loss reference signal depends on the first field of the first signaling, and the sending power of the first signal depends on path loss determined for the first path loss reference signal; the first path loss reference signal is a first downlink reference signal or a second downlink reference signal; and whether the first path loss reference signal is the first downlink reference signal or the second downlink reference signal depends on whether the first symbol set is for downlink.

As an embodiment, the problem to be solved by the present application comprises: how to determine the path loss in the uplink power control parameters in the SBFD scenario.

As an embodiment, the characteristics of the above method comprise: the present application solves the above problem by configuring two sets of path loss reference signals and using path loss determined by measuring different path loss reference signals by the terminal when performing uplink transmission in SBFD symbols and non-SBFD symbols.

As an embodiment, the benefits of the above method comprise: channel estimation is optimized and the transmission efficiency of the system is improved.

As an embodiment, the benefits of the above method comprise: configuring appropriate path loss reference signals in SBFD symbols and non-SBFD symbols respectively can improve transmission quality and anti-interference capability, thereby improving system capacity.

As an embodiment, the benefits of the above method comprise: different path loss reference signals are selected for different interference environments to ensure that the system can maintain a stable working state in various working environments.

According to one aspect of the present application, the above method is characterized in that a first factor depends on the first field of the first signaling, and the sending power of the first signal depends on the first factor; the first factor is a value between 0 and 1; the first factor is a first candidate factor or a second candidate factor; and whether the first factor is the first candidate factor or the second candidate factor depends on whether the first symbol set is for downlink.

As an embodiment, the problem to be solved by the present application comprises: how to determine the first factor in the uplink power control parameters in the SBFD scenario, wherein the first factor is *alpha* for uplink power control.

As an embodiment, the characteristics of the above method comprise: the present application solves the above problem by configuring two sets of first factors and using different first factors by the terminal when performing uplink transmission in SBFD symbols and non-SBFD symbols.

As an embodiment, the benefits of the above method comprise: the coverage range and the anti-interference capability of uplink transmission signals of the terminal are increased.

As an embodiment, the benefits of the above method comprise: using a smaller first factor in non-SBFD symbols can reduce system power consumption and improve system energy utilization rate.

As an embodiment, the benefits of the above method comprise: selecting appropriate first factors for different interference environments can ensure that the system can maintain a stable working state in various working environments.

According to one aspect of the present application, the above method is characterized in that the first node is a user equipment.

According to one aspect of the present application, the above method is characterized in that the first node is a relay node.

The present application discloses a method used in a second node for wireless communication, comprising:
sending target signaling and first signaling, wherein the target signaling indicates a first symbol set; and the first signaling comprises a first field, the first field of the first signaling indicates at least one reference signal resource and a first power value, and the first power value is one of a first candidate power value and a second candidate power value; and
receiving a first signal in the first symbol set,
wherein a sending power of the first signal depends on the first power value; the first signal has a spatial relation with the at least one reference signal resource; and whether the first power value is the first candidate power value or the second candidate power value depends on whether the first symbol set is for downlink.

According to one aspect of the present application, the above method is characterized in that the first field of the first signaling indicates a first *SRI-PUSCH-PowerControl,* and the first candidate power value and the second candidate power value are configured by the first *SRI-PUSCH-PowerControl.*

According to one aspect of the present application, the above method is characterized in that the first field of the first signaling indicates a first *P0-PUSCH-SetList,* and the first candidate power value and the second candidate power value are configured by two first-type power parameters in the first *P0-PUSCH-SetList* respectively.

According to one aspect of the present application, the above method is characterized in that the first field of the first signaling indicates a first *P0-PUSCH-Set,* and the first candidate power value and the second candidate power value are respectively configured by two second-type power parameters in the first *P0-PUSCH-Set.*

According to one aspect of the present application, the above method is characterized by comprising:
sending second signaling,
wherein the second signaling comprises a second field, the second field of the second signaling indicates a first offset value, the sending power of the first signal depends on the first offset value, and the first offset value depends on whether the first symbol set is for downlink.

According to one aspect of the present application, the above method is characterized in that a first path loss reference signal depends on the first field of the first signaling, and the sending power of the first signal depends on path loss determined for the first path loss reference signal; the first path loss reference signal is a first downlink reference signal or a second downlink reference signal; and whether the first path loss reference signal is the first downlink reference signal or the second downlink reference signal depends on whether the first symbol set is for downlink.

According to one aspect of the present application, the above method is characterized in that a first factor depends on the first field of the first signaling, and the sending power of the first signal depends on the first factor; the first factor is a value between 0 and 1; the first factor is a first candidate factor or a second candidate factor; and whether the first factor is the first candidate factor or the second candidate factor depends on whether the first symbol set is for downlink.

According to one aspect of the present application, the above method is characterized in that the second node is a base station.

According to one aspect of the present application, the above method is characterized in that the second node is a user equipment.

According to one aspect of the present application, the above method is characterized in that the second node is a relay node.

The present application discloses a device used in a first node for wireless communication, comprising:
a first receiver receiving target signaling and first signaling, wherein the target signaling indicates a first symbol set; and the first signaling comprises a first field, the first field of the first signaling indicates at least one reference signal resource and a first power value, and the first power value is one of a first candidate power value and a second candidate power value; and
a first transmitter sending a first signal in the first symbol set,
wherein a sending power of the first signal depends on the first power value; the first signal has a spatial relation with the at least one reference signal resource; and whether the first power value is the first candidate power value or the second candidate power value depends on whether the first symbol set is for downlink.

The present application discloses a device used in a second node for wireless communication, comprising:
a second transmitter sending target signaling and first signaling, wherein the target signaling indicates a first symbol set; and the first signaling comprises a first field, the first field of the first signaling indicates at least one reference signal resource and a first power value, and the first power value is one of a first candidate power value and a second candidate power value; and
a second receiver receiving a first signal in the first symbol set,
wherein a sending power of the first signal depends on the first power value; the first signal has a spatial relation with the at least one reference signal resource; and whether the first power value is the first candidate power value or the second candidate power value depends on whether the first symbol set is for downlink.

As an embodiment, compared with a traditional solution, the present application has the following beneficial, but not limited to, advantages:

The power control parameters are configured respectively for the SBFD symbols and the non-SBFD symbols, and can be adjusted in time according to changes in signal transmission scenarios, thereby improving system flexibility and adaptability;

The power allocation is better controlled, thereby effectively reducing system power consumption while ensuring system transmission performance;

The interference is effectively reduced and the anti-interference capability of the system is improved, thereby improving signal quality and reliability of data transmission.

### Brief Description of the Drawings

Other features, purposes and advantages of the present application will become more apparent by reading the detailed description of non-limiting embodiments with reference to the following drawings:
FIG. 1 shows a flow chart of transmission of a first node according to an embodiment of the present application;
FIG. 2 shows a schematic diagram of a network architecture according to an embodiment of the present application;
FIG. 3 shows a schematic diagram of an embodiment of a radio protocol architecture for a user plane and a control plane according to an embodiment of the present application;
FIG. 4 shows a schematic diagram of a first communication device and a second communication device according to an embodiment of the present application;
FIG. 5 shows a flow chart of transmission between a first node and a second node according to an embodiment of the present application;
FIG. 6 shows a schematic diagram of two cases of whether a first symbol set is for downlink according to an embodiment of the present application;
FIG. 7 shows a first schematic diagram in which a first field of first signaling indicates a first power value according to an embodiment of the present application;
FIG. 8 shows a second schematic diagram in which a first field of first signaling indicates a first power value according to an embodiment of the present application;
FIG. 9 shows a third schematic diagram in which a first field of first signaling indicates a first power value according to an embodiment of the present application;
FIG. 10 shows a schematic diagram of a relation between a first field of first signaling and a first path loss reference signal according to an embodiment of the present application;
FIG. 11 shows a schematic diagram of a relation between a first field of first signaling and a first factor according to an embodiment of the present application;
FIG. 12 shows a structural block diagram of a processing apparatus used in a first node according to an embodiment of the present application; and
FIG. 13 shows a structural block diagram of a processing apparatus used in a second node according to an embodiment of the present application.

### Detailed Description of Embodiments

The technical solutions of the present application will be further described in detail below in conjunction with the drawings. It should be noted that, in the absence of conflict, embodiments and the features in the embodiments in the present application can be arbitrarily combined with each other.

### Embodiment 1

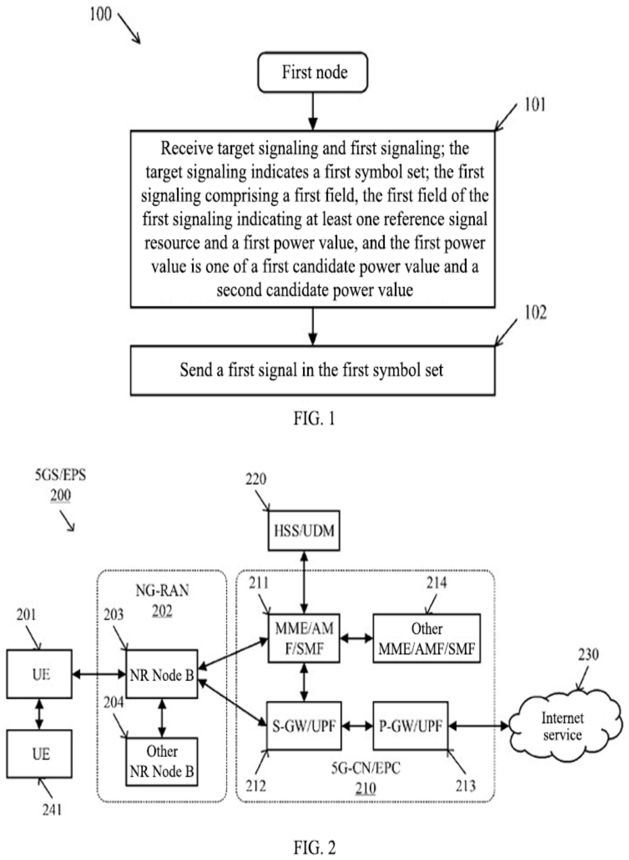

Embodiment 1 illustrates a flow chart of transmission of a first node according to an embodiment of the present application, as shown in FIG. 1. In FIG. 1, each block represents one step. In particular, the order of steps in the blocks does not represent a particular time sequence relation between the steps.

The first node receives target signaling and first signaling in step 101, wherein the target signaling indicates a first symbol set; and the first signaling comprises a first field, the first field of the first signaling indicates at least one reference signal resource and a first power value, and the first power value is one of a first candidate power value and a second candidate power value; and in step 102, a first signal is sent in the first symbol set.

In embodiment 1, the sending power of the first signal depends on the first power value; the first signal has a spatial relation with the at least one reference signal resource; and whether the first power value is the first candidate power value or the second candidate power value depends on whether the first symbol set is for downlink.

As an embodiment, the target signaling comprises higher layer signaling.

As an embodiment, the target signaling comprises Radio Resource Control (RRC) signaling.

As an embodiment, the target signaling comprises a plurality of RRC messages.

As an embodiment, the target signaling is an RRC message.

As an embodiment, the target signaling comprises one or more RRC Information Elements (IEs).

As an embodiment, the target signaling comprises a plurality of RRC IEs.

As an embodiment, the target signaling is an RRC IE.

As an embodiment, the target signaling comprises one or more fields in an RRC IE.

As an embodiment, the target signaling comprises dynamic signaling.

As an embodiment, the target signaling comprises Medium Access Control (MAC) signaling.

As an embodiment, the target signaling comprises MAC Control Elements (CEs).

As an embodiment, the target signaling comprises Downlink Control Information (DCI).

As an embodiment, the target signaling comprises part or all of the fields in a DCI.

As an embodiment, the target signaling is jointly carried by RRC layer signaling and physical layer signaling.

As an embodiment, the target signaling comprises the RRC signaling and the DCI.

As an embodiment, the target signaling indicates the type of each symbol in the first symbol set.

As an embodiment, the target signaling is used for determining the type of each symbol in the first symbol set.

As an embodiment, the target signaling is used for indicating a period of the symbols, and the period of the symbols comprises a period of the types of the symbols.

As an embodiment, the types of the symbols comprise Uplink (UL) and Downlink (DL).

As an embodiment, the types of the symbols comprise at least one of UL, DL, and flexible.

As an embodiment, the types of the symbols comprise the types of symbols other than UL, DL and flexible.

As an embodiment, the type of any symbol in the first symbol set is UL or DL.

As an embodiment, the type of any symbol in the first symbol set is one of UL, DL or flexible.

As an embodiment, the target signaling indicates a number of slots comprising only DL symbols in the first symbol set; and the type of each symbol in the slots comprising only DL symbols is DL.

As an embodiment, the target signaling indicates a number of slots comprising only UL symbols in the first symbol set; and the type of each symbol in the slots comprising only UL symbols is UL.

As an embodiment, the target signaling indicates a number of consecutive DL symbols comprised starting from a first slot after a last slot comprising only DL symbols in the first symbol set.

As an embodiment, the target signaling indicates a number of consecutive UL symbols comprised at the end of the last slot before the first slot comprising only UL symbols in the first symbol set.

As an embodiment, the first symbol set comprises at least one symbol other than UL symbols and DL symbols indicated through the target signaling.

As a sub-embodiment of the embodiment, the type of the at least one symbol comprises flexible.

As a sub-embodiment of the embodiment, the type of the at least one symbol is flexible.

As an embodiment, the target signaling indicates a starting symbol occupied by consecutive DL symbols in any slot in the first symbol set.

As an embodiment, the type of symbols comprised in any slot in the first symbol set is DL or flexible.

As an embodiment, the target signaling indicates a last symbol occupied by consecutive UL symbols in any slot in the first symbol set.

As an embodiment, the type of symbols comprised in any slot in the first symbol set is UL or flexible.

As an embodiment, the target signaling comprises TDD uplink and downlink configuration signaling.

As a sub-embodiment of the embodiment, the TDD uplink and downlink configuration signaling is indicated through higher layer signaling.

As a sub-embodiment of the embodiment, the TDD uplink and downlink configuration signaling is indicated through semi-static signaling.

As a sub-embodiment of the embodiment, the TDD uplink and downlink configuration signaling is indicated through RRC signaling.

As a sub-embodiment of the embodiment, the TDD uplink and downlink configuration signaling is indicated through *TDD-UL-DL-ConfigCommon* IE.

As a sub-embodiment of the embodiment, the TDD uplink and downlink configuration signaling is indicated through *TDD-UL-DL-ConfigDedicated* IE.

As a sub-embodiment of the embodiment, the TDD uplink and downlink configuration signaling is indicated through at least the former of *TDD-UL-DL-ConfigCommon* IE and *TDD-UL-DL-ConfigDedicated* IE.

As a sub-embodiment of the embodiment, the TDD uplink and downlink configuration signaling is indicated through a *TDD-UL-DL-Pattern* field.

As a sub-embodiment of the embodiment, the TDD uplink and downlink configuration signaling is indicated through MAC layer signaling.

As a sub-embodiment of the embodiment, the TDD uplink and downlink configuration signaling is indicated through MAC CE.

As a sub-embodiment of the embodiment, the TDD uplink and downlink configuration signaling is indicated through dynamic signaling.

As a sub-embodiment of the embodiment, the TDD uplink and downlink configuration signaling is indicated through physical layer signaling.

As a sub-embodiment of the embodiment, the TDD uplink and downlink configuration signaling is indicated through Layer 1 signaling.

As a sub-embodiment of the embodiment, the TDD uplink and downlink configuration signaling is indicated through a DCI.

As an embodiment, the name of the RRC signaling carrying the target signaling comprises "TDD".

As an embodiment, the name of the RRC signaling carrying the target signaling comprises "DL".

As an embodiment, the name of the RRC signaling carrying the target signaling comprises "UL".

As an embodiment, the name of the RRC signaling carrying the target signaling comprises "Config".

As an embodiment, the name of the RRC signaling carrying the target signaling comprises "SBFD".

As an embodiment, the name of the RRC signaling carrying the target signaling comprises "subband".

As an embodiment, the name of the RRC signaling carrying the target signaling comprises "duplex".

As an embodiment, the target signaling is used for scheduling the first signal.

As an embodiment, the target signaling comprises scheduling information of the first signal.

As an embodiment, the scheduling information comprises one or more of time domain resources, frequency domain resources, a Modulation and Coding Scheme (MCS), DeModulation Reference Signal (DMRS) ports, a Hybrid Automatic Repeat reQuest (HARQ) process number, a Transmission Configuration Indicator (TCI) state, a Redundancy Version (RV), a New Data Indicator (NDI), antenna ports, and a Sounding Reference Signal (SRS) request.

As an embodiment, the target signaling is used for configuring the transmission of the first signal.

As an embodiment, the transmission configuration information of the first signal is carried by the target signaling.

As an embodiment, the target signaling comprises the configuration information of the first signal.

As an embodiment, the configuration information comprises one or more of time domain resources, frequency domain resources, frequency hopping, MCS, power control, a transform precoder, HARQ process number, DMRS ports, antenna ports and an SRS resource indicator.

As an embodiment, the target signaling indicates the time domain resources occupied by the first signal.

As an embodiment, the target signaling indicates the number and time domain positions of the symbols occupied by the first signal.

As an embodiment, the time domain resources allocated to the first signal comprises the first symbol set.

As an embodiment, the first symbol set comprises the time domain resources allocated to the first signal.

As an embodiment, the target signaling indicates that the first symbol set is allocated to the first signal.

As an embodiment, the target signaling indicates a starting slot occupied by the first symbol set, a starting symbol occupied by the first symbol set in the starting slot, and a number of symbols comprised in the first symbol set.

As an embodiment, the target signaling comprises a DCI, and a DCI field, time domain resource assignment in the target signaling indicates the first symbol set.

As an embodiment, the target signaling comprises *ConfiguredGrantConfig* IE, and a *timeDomainAllocation* field in the target signaling is used for indicating the first symbol set.

As an embodiment, the target signaling comprises *CSI-ReportConfig* IE, and *reportSlotOffsetList* in the target signaling is used for indicating the first symbol set.

As an embodiment, the target signaling comprises *CSI-ReportConfig* IE, and a *reportSlotOffsetListDCI-0-1* field in the target signaling is used for indicating the first symbol set.

As an embodiment, the target signaling comprises *CSI-ReportConfig* IE, and a *reportSlotOffsetListDCI-0-2* field in the target signaling is used for indicating the first symbol set.

As an embodiment, the first symbol set comprises at least one symbol.

As an embodiment, the first symbol set comprises only one symbol.

As an embodiment, the first symbol set comprises a plurality of symbols.

As a sub-embodiment of the embodiment, the plurality of symbols are continuous.

As a sub-embodiment of the embodiment, two symbols of the plurality of symbols are discontinuous.

As an embodiment, the symbols in the present application are single carrier symbols.

As an embodiment, the symbols in the present application are multi carrier symbols.

As an embodiment, the multi carrier symbols in the present application are Single Carrier-Frequency Division Multiple Access (SC-FDMA) symbols.

As an embodiment, the multi carrier symbols in the present application are Filter Bank Multi Carrier (FBMC) symbols.

As an embodiment, the multi carrier symbols in the present application are Orthogonal Frequency Division Multiplexing (OFDM) symbols.

As an embodiment, the symbols in the present application are obtained after the output of a transform precoding undergoes OFDM symbol generation.

As an embodiment, the multi carrier symbols in the present application are Discrete Fourier Transform-spread-OFDM (DFT-s-OFDM) symbols.

As an embodiment, the multi carrier symbols in the present application comprise Cyclic Prefix-OFDM (CP-OFDM) symbols.

As an embodiment, the first signaling is used for scheduling the first signal.

As an embodiment, the first signaling comprises scheduling information of the first signal.

As an embodiment, the first signaling is used for configuring the transmission of the first signal.

As an embodiment, the transmission configuration information of the first signal is carried by the first signaling.

As an embodiment, the first signaling comprises the configuration information of the first signal.

As an embodiment, the first signaling is a DCI.

As an embodiment, the first signaling comprises part or all of the fields in a DCI.

As an embodiment, a Cyclic Redundancy Check (CRC) of the DCI is scrambled by a dedicated Radio Network Temporary Identifier (RNTI) of a User Equipment (UE).

As a sub-embodiment of the embodiment, the CRC of the DCI is scrambled by a C (Cell)-RNTI.

As a sub-embodiment of the embodiment, the CRC of the DCI is scrambled by an MCS-C-RNTI.

As a sub-embodiment of the embodiment, the CRC of the DCI is scrambled by a Configured Scheduled (CS)-RNTI.

As a sub-embodiment of the embodiment, the CRC of the DCI is scrambled by a Semi-Persistent (SP)-Channel State Information (CSI)-RNTI.

As a sub-embodiment of the embodiment, a format used by the DCI is DCI format 0_1.

As a sub-embodiment of the embodiment, the format used by the DCI is DCI format 0_2.

As a sub-embodiment of the embodiment, the format used by the DCI is the DCI format other than DCI format 0_1 and DCI format 0_2.

As an embodiment, the first field of the first signaling comprises at least one bit.

As an embodiment, the number of bits comprised in the first field of the first signaling is equal to 1, 2 or 3.

As an embodiment, the first field of the first signaling is an SRS resource set indicator field in the DCI.

As an embodiment, the first field of the first signaling is an SRI field in the DCI.

As an embodiment, the first field of the first signaling is an SRS resource indicator field in the DCI.

As an embodiment, the first field of the first signaling is a Second SRS resource indicator field in the DCI.

As an embodiment, the first field of the first signaling comprises a first sub-field and a second sub-field, and the first sub-field and the second sub-field are a SRS resource set indicator field and a Second SRS resource indicator field in the DCI respectively.

As an embodiment, the first signaling is RRC signaling.

As an embodiment, the first signaling comprises one or more RRC IEs.

As an embodiment, the first signaling comprises a plurality of RRC IEs.

As an embodiment, the first signaling is one RRC IE.

As an embodiment, the first signaling comprises one or more fields in one RRC IE.

As an embodiment, the first signaling comprises one or more fields in *ConfiguredGrantConfig* IE.

As a sub-embodiment of the embodiment, the first signaling comprises a *rrc-ConfiguredUplinkGrant* field.

As an embodiment, the first field of the first signaling is a *srs-ResourceIndicator* field in *ConfiguredGrantConfig* IE.

As an embodiment, the first field of the first signaling is a *srs-ResourceIndicator2* field in *ConfiguredGrantConfig* IE.

As an embodiment, the first field of the first signaling comprises a first sub-field and a second sub-field, and the first sub-field and the second sub-field are a *srs-ResourceIndicator* field and a *srs-ResourceIndicator2* field in *ConfiguredGrantConfig* IE respectively.

As an embodiment, the first signaling indicates RB occupied by the first signal.

As an embodiment, the first signaling indicates MCS used by the first signal.

As an embodiment, the first signaling indicates RV used by the first signal.

As an embodiment, the first signaling indicates the HARQ process number used by the first signal.

As an embodiment, the target signaling and the first signaling are different fields in the same DCI respectively, and the same DCI is used for scheduling or activating the transmission of the first signal.

As an embodiment, the target signaling and the first signaling are different fields in the same RRC IE respectively, and the same RRC IE is used for configuring the transmission of the first signal.

As an embodiment, the first field of the first signaling indicates at least one reference signal resource and a first power value.

As an embodiment, the first field of the first signaling indicates at least one reference signal resource.

As an embodiment, the first field of the first signaling indicates a first value, the first value is mapped to *SRI-PUSCH-PowerControlId* in a first *SRI-PUSCH-PowerControl,* the first *SRI-PUSCH-PowerControl* comprises at least one reference signal identity, and the at least one reference signal identity is associated with at least one reference signal resource.

As a sub-embodiment of the embodiment, the first *SRI-PUSCH-PowerControl* comprises only one reference signal identity.

As a dependent embodiment of the sub-embodiment, the reference identity is associated with a reference signal resource.

As a dependent embodiment of the sub-embodiment, the benefits of the above method comprise: there is no need to additionally increase the number of path loss estimates that the UE needs to maintain simultaneously, with good backward compatibility.

As a sub-embodiment of the embodiment, the first *SRI-PUSCH-PowerControl* comprises 2 reference signal identities.

As a dependent embodiment of the sub-embodiment, each reference signal identity of the 2 reference signal identities is associated with one reference signal resource, and the 2 reference signal resources associated with the 2 reference signal identities are different.

As a dependent embodiment of the sub-embodiment, the benefits of the above method comprise: uplink transmission in SBFD symbols and non-SBFD symbols performs path loss estimation based on the measurement of different reference signal resources, and performs uplink power control more flexibly and accurately, thereby improving uplink transmission performance.

As a sub-embodiment of the embodiment, the one reference signal identity is a *PUSCH-PathlossReferenceRS-Id.*

As a sub-embodiment of the embodiment, the reference signal resources comprise one of Channel State Information-Reference Signal (CSI-RS) resources or SSB.

As a sub-embodiment of the embodiment, the reference signal resources comprise the CSI-RS resources.

As a sub-embodiment of the embodiment, the reference signal resource corresponds to an *NZP-CSI-RS-ResourceId.*

As a sub-embodiment of the embodiment, the reference signal resources comprise the SSB.

As a sub-embodiment of the embodiment, the reference signal resource corresponds to an *SSB-Index.*

As an embodiment, the SSB in the present application refers to: a synchronization signal block.

As an embodiment, the SSB in the present application refers to: a Synchronization Signal (SS)/Physical Broadcast Channel (PBCH) block.

Typically, the reception occasions of PBCH, Primary Synchronization Signal (PSS), and Secondary Synchronization Signal (SSS) are in consecutive symbols and form an SS/PBCH block.

As an embodiment, the first field of the first signaling indicates a first value, and the first value is mapped to at least one SRS resource.

As a sub-embodiment of the embodiment, the first value is mapped to an SRS resource, and the at least one reference signal resource is the SRS resource.

As a sub-embodiment of the embodiment, the first value is mapped to two SRS resources, and the at least one reference signal resource refers to the two SRS resources respectively.

As an embodiment, the first field of the first signaling indicates a first value, and the first value indicates at least one SRS resource set.

As a sub-embodiment of the embodiment, the first value indicates one SRS resource set, and the at least one reference signal resource comprises at least one of the reference signal resources in the SRS resource set.

As a sub-embodiment of the embodiment, the first value indicates 2 SRS resource sets, and the at least one reference signal resource comprises at least one of the reference signal resources in each reference signal resource set of the 2 SRS resource sets.

As an embodiment, the first field of the first signaling indicates the first power value.

As an embodiment, the first field of the first signaling indicates the first candidate power value and the second candidate power value.

As an embodiment, the first power value is one of the first candidate power value and the second candidate power value.

As an embodiment, the unit of the first power value is deciBel relative to one milliwatt (dBm).

As an embodiment, the unit of the first power value is milliWatt (mW).

As an embodiment, the unit of the first power value is Watt (W).

As an embodiment, the first power value is the first candidate power value.

As an embodiment, the unit of the first candidate power value is dBm.

As an embodiment, the unit of the first candidate power value is mW.

As an embodiment, the unit of the first candidate power value is W.

As an embodiment, the first power value is the second candidate power value.

As an embodiment, the unit of the second candidate power value is dBm.

As an embodiment, the unit of the second candidate power value is mW.

As an embodiment, the unit of the second candidate power value is W.

As an embodiment, the first signal comprises a baseband signal.

As an embodiment, the first signal comprises a radio frequency signal.

As an embodiment, the first signal comprises a wireless signal.

As an embodiment, the first signal comprises Uplink Control Information (UCI).

As an embodiment, the first signal comprises HARQ-ACK (ACKnowledgement).

As an embodiment, the first signal carries a bit block, and the bit block comprises at least one Transport Block (TB) or at least one Code Block Group (CBG).

As an embodiment, the first signal is transmitted on the basis of a dynamically scheduled Physical Uplink Shared Channel (PUSCH).

As an embodiment, the first signal is transmitted on the basis of a configured grant PUSCH.

As an embodiment, the first signal is transmitted on the basis of a codebook PUSCH.

As an embodiment, the first signal is transmitted on the basis of a non-codebook PUSCH.

As an embodiment, the first signal occupies each symbol in the first symbol set.

As an embodiment, at least one symbol in the first symbol set is not occupied by the first signal.

As an embodiment, the time domain resources occupied by the first signal belong to the first symbol set.

As an embodiment, the first node determines by itself whether to send the first signal in the first symbol set.

As an embodiment, the sending power of the first signal is equal to a smaller value of a target power value and the upper limit value of the first power, and the target power value depends on the first power value.

As a sub-embodiment of the embodiment, the upper limit value of the first power is a maximum sending power value of the first signal configured by the first node.

As a sub-embodiment of the embodiment, the upper limit value of the first power is a maximum output power configured by the first node.

As a sub-embodiment of the embodiment, the upper limit value of the first power is a maximum output power of a serving cell configured for a carrier by the first node.

As a sub-embodiment of the embodiment, the upper limit value of the first power is correlated with the capability of the first node.

As a sub-embodiment of the embodiment, the upper limit value of the first power is correlated with a category of the first node.

As a sub-embodiment of the embodiment, the upper limit value of the first power corresponds to *P_{CMAX,f,c}*(*i*) in 3GPP protocol.

As a sub-embodiment of the embodiment, the target power value is linearly correlated with the first power value.

As an embodiment, the first power value is used for determining *P_{O_PUSCH,b,f,c}* (*j*) in Technical Specification (TS) 38.213.

As an embodiment, the first power value is *P_{O_UE_PUSCH,b,f,c}*(*j*) in TS 38.213.

As an embodiment, the meaning of the feature "the first signal has a spatial relation with the at least one reference signal resource" comprises: the at least one reference signal resource is at least one SRS resource, and the first signal is QCL with the at least one SRS resource.

As an embodiment, the QCL in the present application refers to: Quasi Co-Location.

As an embodiment, the QCL in the present application refers to: Quasi Co-Located.

As an embodiment, the QCL comprises QCL parameters.

As an embodiment, the QCL comprises QCL assumptions.

As an embodiment, the types of the QCL comprise TypeA, TypeB, TypeC and TypeD.

As an embodiment, the QCL parameters with the type TypeA of the QCL comprise Doppler shift, Doppler spread, average delay and delay spread.

As an embodiment, the QCL parameters with the type TypeB of the QCL comprise Doppler shift and Doppler spread.

As an embodiment, the QCL parameters with the type TypeC of the QCL comprise Doppler shift and average delay.

As an embodiment, the QCL parameters with the type TypeD of the QCL comprise a spatial Rx parameter.

As an embodiment, the QCL comprises at least one of Doppler shift, Doppler spread, average delay, delay spread, a spatial Tx parameter or the spatial Rx parameter.

As an embodiment, see Section 5.1.5 of TS 38.214 for specific definitions of the TypeA, the TypeB, the TypeC, and the TypeD.

As an embodiment, the meaning of the feature "the first signal has a spatial relation with the at least one reference signal resource" comprises: the at least one reference signal resource is at least one SRS resource, and the first signal uses the same antenna port as the SRS port(s) in the at least one SRS resource.

As an embodiment, the meaning of the feature "the first signal has a spatial relation with the at least one reference signal resource" comprises: the at least one reference signal resource is at least one SRS resource, and the first node sends the first signal using the same antenna port as the antenna port of at least one SRS resource.

As an embodiment, the meaning of the feature "the first signal has a spatial relation with the at least one reference signal resource" comprises: the at least one reference signal resource is at least one SRS resource, and the number of antenna ports for sending the first signal is the same as the number of antenna ports of the at least one SRS resource.

As an embodiment, the meaning of the feature "the first signal has a spatial relation with the at least one reference signal resource" comprises: the at least one reference signal resource is at least one SRS resource, and the antenna port for sending the first signal and the antenna port of the at least one SRS resource have the same spatial relation.

As an embodiment, the spatial relation comprises: a spatial Tx parameter.

As an embodiment, the spatial relation comprises a spatial domain transmission filter.

As an embodiment, the spatial relation comprises a precoder.

As an embodiment, the spatial relation comprises beamforming.

As an embodiment, the meaning of the feature "the first signal has a spatial relation with the at least one reference signal resource" comprises: the at least one reference signal resource is at least one downlink reference signal resource, and the sending power value of the first signal depends on the path loss estimated on the at least one downlink reference signal resource.

As an embodiment, the meaning of the feature "the first signal has a spatial relation with the at least one reference signal resource" comprises: the at least one reference signal resource is at least one downlink reference signal resource, and a spatial Rx parameter on the at least one downlink reference signal resource is used for determining a spatial Tx parameter of the first signal.

As an embodiment, the spatial Tx parameter comprises at least one of a transmission antenna port, a transmission antenna port group, a transmission beam, a transmission analog beamforming matrix, a transmission analog beamforming vector, a transmission beamforming matrix, a transmission beamforming vector or a spatial domain transmission filter.

As an embodiment, the spatial Rx parameter comprises at least one of a receiving beam, a receiving analog beamforming matrix, a receiving analog beamforming vector, a receiving beamforming matrix, a receiving beamforming vector or a spatial domain receiving filter.

As an embodiment, the first candidate power value is different from the second candidate power value.

As an embodiment, the first candidate power value is greater than the second candidate power value.

As an embodiment, the first candidate power value is less than the second candidate power value.

As an embodiment, the first candidate power value and the second candidate power value are configured by RRC; and the benefits of the method comprise: flexible configuration, which is beneficial for adapting to different interference environments.

As an embodiment, the first candidate power value is equal to the sum of the second candidate power value and a given offset value.

As an embodiment, the first candidate power value is equal to a difference obtained by subtracting the given offset value from the second candidate power value.

As a sub-embodiment of the above two embodiments, the second candidate power value is configured by RRC.

As a sub-embodiment of the above two embodiments, the given offset value is fixed, or the given offset value is predefined; and the benefits of the method comprise: easy implementation and saving of signaling overhead.

As a sub-embodiment of the above two embodiments, the given offset value is configured by RRC; and the benefits of the method comprise: flexible configuration, which is beneficial for adapting to different interference environments.

As an embodiment, whether the first power value is the first candidate power value or the second candidate power value depends on whether the first symbol set is for downlink.

As an embodiment, the first symbol set is for downlink, and the first power value is the first candidate power value; and the first symbol set is not for downlink, and the first power value is the second candidate power value.

### Embodiment 2

Embodiment 2 illustrates a schematic diagram of a network architecture according to an embodiment of the present application, as shown in FIG. 2.

FIG. 2 indicates a network architecture of Long-Term Evolution (LTE), Long-Term Evolution Advanced (LTE-A) and future 5G systems. The network architecture of the LTE, the LTE-A and the future 5G systems is referred to as Evolved Packet System (EPS). The network architecture of 5G NR or the LTE may be referred to as 5G System (5GS)/EPS 200 or some other suitable terminology. The 5GS/EPS 200 may comprise one or more UEs 201, a UE 241 that performs sidelink communication with the UE 201, a Next Generation Radio Access Network (NG-RAN) 202, a 5G Core Network (5G-CN)/Evolved Packet Core (EPC) 210, a Home Subscriber Server (HSS)/Unified Data Management (UDM) 220, and an Internet service 230. The 5GS/EPS 200 may be interconnected with other access networks, but these entities/interfaces are not shown for simplicity. As shown in FIG. 2, the 5GS/EPS 200 provides a packet switching service, but those skilled in the art will readily appreciate that various concepts presented throughout the present application can be extended to networks that provide circuit switching services. The NG-RAN 202 comprises an NR node B (gNB) 203 and other gNBs 204. The gNB 203 provides user and control plane protocol termination towards the UE 201. The gNB 203 may be connected to other gNBs 204 via an Xn interface (e.g., backhaul). The gNB 203 may also be referred to as a base station, a base transceiver station, a radio base station, a radio transceiver, a transceiver function, a Basic Service Set (BSS), an Extended Service Set (ESS), a Transmitter Receiver Point (TRP), or some other suitable terminology. The gNB 203 provides an access point to the 5G-CN/EPC 210 for the UE 201. Instances of the UE 201 comprise a cellular phone, a smart phone, a Session Initiation Protocol (SIP) phone, a laptop computer, a Personal Digital Assistant (PDA), a satellite radio, a global positioning system, a multimedia apparatus, a video apparatus, a digital audio player (e.g., an MP3 player), a camera, a game console, a UAV, an aircraft, a narrowband physical network device, a machine type communication device, a land vehicle, an automobile, a wearable device, or any other similarly functional apparatuses. Those skilled in the art may also refer to the UE 201 as a mobile station, a subscriber station, a mobile element, a subscriber element, a wireless element, a remote element, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminology. The gNB 203 is connected to the 5G-CN/EPC 210 through an S1/NG interface. The 5G-CN/EPC 210 comprises a Mobility Management Entity (MME)/Authentication Management Field (AMF)/Session Management Function (SMF) 211, other MME/AMF/SMF 214, a Service Gateway (S-GW)/User Plane Function (UPF) 212, and a Packet Data Network Gateway (P-GW)/UPF 213. The MME/AMF/SMF 211 is a control node that processes signaling between the UE 201 and the 5G-CN/EPC 210. Generally, the MME/AMF/SMF 211 provides bearers and connection management. All user Internet Protocol (IP) packets are transmitted through the S-GW/UPF 212, and the S-GW/UPF 212 itself is connected to the P-GW/UPF 213. The P-GW provides UE IP address allocation and other functions. The P-GW/UPF 213 is connected to the Internet service 230. The Internet service 230 comprises operator-corresponding Internet protocol services, which may specifically comprise Internet, Intranet, IP Multimedia Subsystem (IMS) and packet switching services.

As an embodiment, the first node in the present application comprises the UE 201.

As an embodiment, the second node in the present application comprises the gNB 203.

As an embodiment, the UE 201 comprises a mobile phone.

As an embodiment, the UE 201 is a means of transportation comprising an automobile.

As an embodiment, the gNB 203 is a macro cell base station.

As an embodiment, the gNB 203 is a micro cell base station.

As an embodiment, the gNB 203 is a pico cell base station.

As an embodiment, the gNB 203 is a femtocell.

As an embodiment, the gNB 203 is a base station device supporting a large-latency difference.

As an embodiment, the gNB 203 is a flying platform device.

As an embodiment, the gNB 203 is a satellite device.

As an embodiment, the gNB 203 is a test device (such as a transceiver apparatus and a signaling tester that simulate some functions of a base station).

As an embodiment, a radio link from the UE 201 to the gNB 203 is an uplink, and the uplink is used for performing uplink transmission.

As an embodiment, a radio link from the gNB 203 to the UE 201 is a downlink, and the downlink is used for performing downlink transmission.

As an embodiment, a radio link between the UE 201 and the gNB 203 comprises a cellular network link.

As an embodiment, the UE 201 and the gNB 203 are connected through a Uu air interface.

As an embodiment, a sender of the target signaling comprises the gNB 203.

As an embodiment, a recipient of the target signaling comprises the UE 201.

As an embodiment, a sender of the first signaling comprises the gNB 203.

As an embodiment, a recipient of the first signaling comprises the UE 201.

As an embodiment, a sender of the first signal comprises the UE 201.

As an embodiment, a recipient of the first signal comprises the gNB 203.

As an embodiment, the UE 201 supports SBFD.

As an embodiment, the UE 201 supports a more flexible duplex mode or full duplex mode.

As an embodiment, the gNB 203 supports SBFD.

As an embodiment, the gNB 203 supports a more flexible duplex mode or full duplex mode.

### Embodiment 3

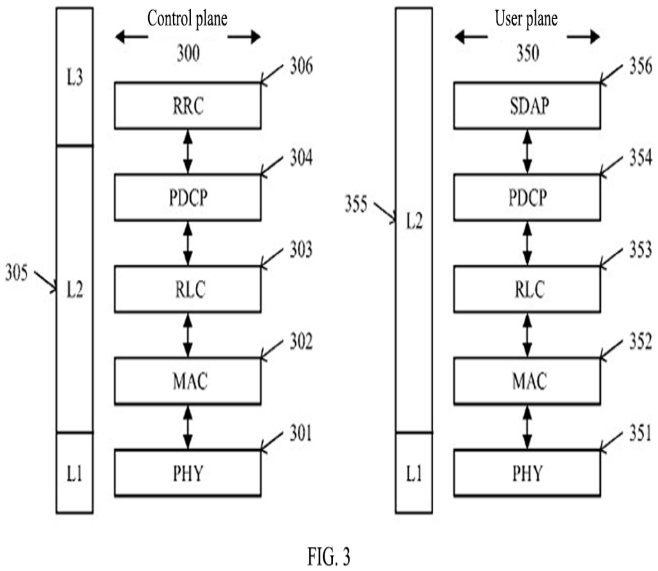

Embodiment 3 illustrates a schematic diagram of an embodiment of a radio protocol architecture for a user plane and a control plane according to an embodiment of the present application, as shown in FIG. 3.

FIG. 3 is a schematic diagram indicating an embodiment of a radio protocol architecture for a user plane 350 and a control plane 300, and FIG. 3 shows a radio protocol architecture for the control plane 300 between a first communication node device (UE or a Road Side Unit (RSU), a vehicle-mounted device or a vehicle-mounted communication module in Vehicle to Everything (V2X)) and a second node device (gNB, UE or RSU, the vehicle-mounted device or the vehicle-mounted communication module in V2X), or between two UEs using three layers: a Layer 1 (L1), a Layer 2 (L2) and a Layer 3 (L3). The L1 is a lowest layer and implements various Physical Layer (PHY) signal processing functions. The L1 will be referred to as PHY 301 herein. The L2 305 is above the PHY 301 and is responsible for links between the first node device and the second node device or between the two UEs through the PHY 301. The L2 305 comprises a Medium Access Control (MAC) sublayer 302, a Radio Link Control (RLC) sublayer 303, and a Packet Data Convergence Protocol (PDCP) sublayer 304, and these sublayers are terminated at the second node device. The PDCP sublayer 304 provides multiplexing between different radio bearers and logical channels. The PDCP sublayer 304 also provides security by encrypting data packets and provides handover mobile support for the first communication node device between the second communication node devices. The RLC sublayer 303 provides segmentation and reassembly of upper layer data packets, retransmission of lost data packets, and reordering of data packets to compensate for unordered reception caused by a Hybrid Automatic Repeat reQuest (HARQ). The MAC sublayer 302 provides multiplexing between logical and transmission channels. The MAC sublayer 302 is also responsible for allocating various radio resources (e.g., resource blocks) in one cell between the first communication node devices. The MAC sublayer 302 is also responsible for HARQ operation. A Radio Resource Control (RRC) sublayer 306 in the L 3 in the control plane 300 is responsible for obtaining radio resources (i.e., radio bearers) and configuring a lower layer using RRC signaling between the second communication node device and the first communication node device. The radio protocol architecture for the user plane 350 comprises a Layer 1 (L1) and a Layer 2 (L2). The radio protocol architecture for the first communication node device and the second communication node device in the user plane 350 is substantially the same for the physical layer 351, the PDCP sublayer 354 in the L2 355, the RLC sublayer 353 in the L2 355, and the MAC sublayer 352 in the L2 355 as for the corresponding layers and sublayers in the control plane 300, but the PDCP sublayer 354 also provides header compression for upper layer data packets to reduce the radio transmission overhead. The L2 355 in the user plane 350 further comprises a Service Data Adaptation Protocol (SDAP) sublayer 356, and the SDAP sublayer 356 is responsible for mapping between a Quality of Service (QoS) flow and a Data Radio Bearer (DRB) to support the diversity of services. Although not shown, the first communication node device may have several upper layers above the L2 355, comprising a network layer (e.g., an Internet Protocol (IP) layer) terminated at the P-GW on a network side and an application layer terminated on the other end (e.g., a remote UE, a server, etc.) of connection.

As an embodiment, the radio protocol architecture in FIG. 3 is applicable to the first node in the present application.

As an embodiment, the radio protocol architecture in FIG. 3 is applicable to the second node in the present application.

As an embodiment, the target signaling is generated at the RRC 306.

As an embodiment, the target signaling is generated at the MAC sublayer 302 or the MAC sublayer 352.

As an embodiment, the target signaling is generated at the PHY 301 or the PHY 351.

As an embodiment, the first signaling is generated at the RRC 306.

As an embodiment, the first signaling is generated at the MAC sublayer 302 or the MAC sublayer 352.

As an embodiment, the first signaling is generated at the PHY 301 or the PHY 351.

As an embodiment, the first signal is generated at the PHY 301 or the PHY 351.

As an embodiment, the higher layer in the present application means a layer above the physical layer.

As an embodiment, the higher layer in the present application comprises the MAC layer.

As an embodiment, the higher layer in the present application comprises the RRC layer.

### Embodiment 4

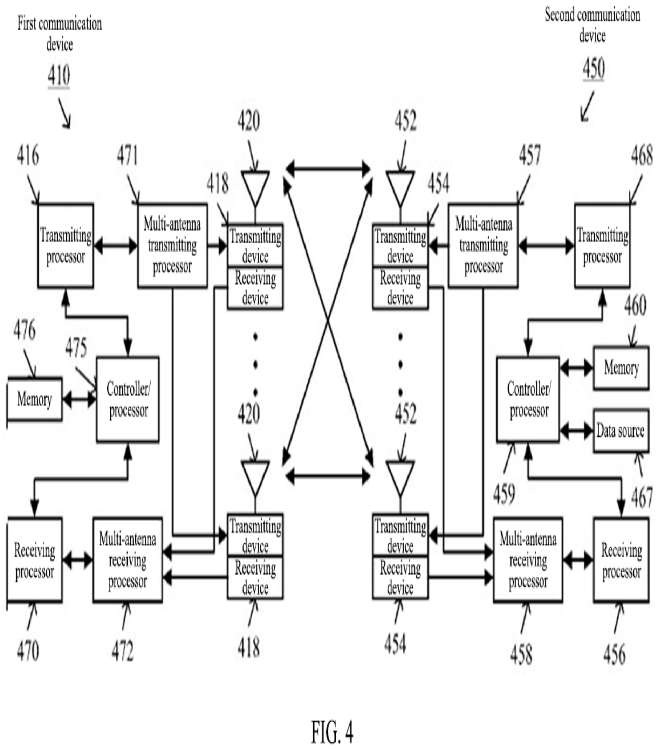

Embodiment 4 illustrates a schematic diagram of a first communication device and a second communication device according to an embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In the transmission from the first communication device 410 to the second communication device 450, at the first communication device 410, upper layer data packets from a core network are provided to the controller/processor 475. The controller/processor 475 implements functionality of the L2. In a DL, the controller/processor 475 provides header compression, encryption, packet segmentation and reordering, multiplexing between logical and transmission channels, and radio resource allocation to the second communication device 450 on the basis of various priority metrics. The controller/processor 475 is also responsible for HARQ operation, retransmission of lost packets, and signaling to the second communication device 450. The transmitting processor 416 and the multi-antenna transmitting processor 471 implement various signal processing functions for the L1 (i.e., the physical layer). The transmitting processor 416 implements coding and interleaving to facilitate Forward Error Correction (FEC) at the second communication device 450, and mapping of signal clusters on the basis of various modulation schemes (e.g., Binary Phase Shift Keying (BPSK), Quadrature Phase Shift Keying (QPSK), M-Phase Shift Keying (M-PSK), and M-Quadrature Amplitude Modulation (M-QAM)). The multi-antenna transmitting processor 471 performs digital spatial precoding, comprising codebook-based precoding, non-codebook-based precoding, and beamforming processing, on coded and modulated symbols, to generate one or more parallel streams. The transmitting processor 416 then maps each parallel stream to a subcarrier, multiplexes the modulated symbols with a reference signal (e.g., pilot frequency) in a time domain and/or frequency domain, and then uses an Inverse Fast Fourier Transform (IFFT) to generate a physical channel carrying a time domain multi-carrier symbol stream. Then, the multi-antenna transmitting processor 471 performs transmitting analog precoding/beamforming operation on the time domain multi-carrier symbol stream. Each transmitting device 418 converts a baseband multi-carrier symbol stream provided by the multi-antenna transmitting processor 471 into a radio frequency stream, and then provides the radio frequency stream to the different antenna 420.

In the transmission from the first communication device 410 to the second communication device 450, at the second communication device 450, each receiving device 454 receives a signal through a corresponding antenna 452 thereof. Each receiving device 454 recovers information modulated onto a radio frequency carrier and converts the radio frequency stream into a baseband multi-carrier symbol stream to provide the baseband multi-carrier symbol stream to the receiving processor 456. The receiving processor 456 and the multi-antenna receiving processor 458 implement various signal processing functions of the L1. The multi-antenna receiving processor 458 performs receiving analog precoding/beamforming operation on the baseband multi-carrier symbol stream from the receiving device 454. The receiving processor 456 uses a Fast Fourier Transform (FFT) to convert the baseband multi-carrier symbol stream after the receiving the analog precoding/beamforming operation from the time domain to the frequency domain. In the frequency domain, the physical layer data signal and the reference signal are demultiplexed by the receiving processor 456, wherein the reference signal will be used for channel estimation, and the data signal is used for recovering any parallel stream with the second communication device 450 as a destination after multi-antenna detection in the multi-antenna receiving processor 458. Symbols on each parallel stream are demodulated and recovered in the receiving processor 456, and soft decisions are generated. Then, the receiving processor 456 decodes and deinterleaves the soft decisions to recover upper layer data and control signals transmitted by the first communication device 410 on the physical channel. Then, the upper layer data and the control signals are provided to the controller/processor 459. The controller/processor 459 implements the functions of the L2. The controller/processor 459 may be associated with the memory 460 that stores program codes and data. The memory 460 may be referred to as a computer-readable medium. In the DL, the controller/processor 459 provides multiplexing between transmission and logical channels, packet reassembly, decryption, header decompression, and control signal processing to recover the upper layer data packets from the core network. Then, the upper layer data packets are provided to all protocol layers above the L2. Various control signals may also be provided to the L3 for L3 processing. The controller/processor 459 is also responsible for error detection using an ACKnowledgement (ACK) and/or Negative ACKnowledgement (NACK) protocol to support the HARQ operation.

In transmission from the second communication device 450 to the first communication device 410, at the second communication device 450, the data source 467 is used to provide the upper layer data packets to the controller/processor 459. The data source 467 represents all the protocol layers above the L2. Similar to the transmission function at the first communication device 410 described in the DL, the controller/processor 459 implements header compression, encryption, packet segmentation and reordering, and multiplexing between logical and transmission channels on the basis of radio resource allocation of the first communication device 410, and implements L2 functions for the user plane and the control plane. The controller/processor 459 is also responsible for HARQ operation, retransmission of lost packets, and signaling to the first communication device 410. The transmitting processor 468 performs modulation mapping and channel coding processing; the multi-antenna transmitting processor 457 performs digital multi-antenna spatial precoding, comprising codebook-based precoding, non-codebook-based precoding, and beamforming processing; and then, the transmitting processor 468 modulates the generated parallel streams into multi-carrier/single-carrier symbol streams, which are provided to the different antenna 452 via the transmitting device 454 after analog precoding/beamforming operation in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In the transmission from the second communication device 450 to the first communication device 410, the functions at the first communication device 410 are similar to the receiving functions at the second communication device 450 described in the transmission from the first communication device 410 to the second communication device 450. Each receiving device 418 receives a radio frequency signal through the corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1. The controller/processor 475 implements the L2 functions. The controller/processor 475 may be associated with the memory 476 that stores program codes and data. The memory 476 may be referred to as a computer-readable medium. The controller/processor 475 provides multiplexing between transmission and logical channels, packet reassembly, decryption, header decompression, and control signal processing to recover upper layer data packets from the second communication device 450. The upper layer data packets from the controller/processor 475 may be provided to the core network. The controller/processor 475 is also responsible for error detection using the ACK and/or NACK protocol to support HARQ operation.

As an embodiment, the second communication device 450 comprises: at least one processor and at least one memory; the at least one memory comprises a computer program code; and the at least one memory and the computer program code are configured to be used together with the at least one processor. The second communication device 450 at least receives target signaling and first signaling, wherein the target signaling indicates a first symbol set; and the first signaling comprises a first field, the first field of the first signaling indicates at least one reference signal resource and a first power value, and the first power value is one of a first candidate power value and a second candidate power value; and sends a first signal in the first symbol set, wherein the sending power of the first signal depends on the first power value; the first signal has a spatial relation with the at least one reference signal resource; and whether the first power value is the first candidate power value or the second candidate power value depends on whether the first symbol set is for downlink.

As an embodiment, the second communication device 450 comprises: a memory for storing a computer-readable instruction program, the computer-readable instruction program generates actions when executed by at least one processor, and the actions comprise: receiving target signaling and first signaling; and sending a first signal in the first symbol set.

As an embodiment, the first communication device 410 comprises: at least one processor and at least one memory, wherein the at least one memory comprises a computer program code; and the at least one memory and the computer program code are configured to be used together with the at least one processor. The first communication device 410 at least sends target signaling and first signaling, wherein the target signaling indicates a first symbol set; and the first signaling comprises a first field, the first field of the first signaling indicates at least one reference signal resource and a first power value, and the first power value is one of a first candidate power value and a second candidate power value; and receives a first signal in the first symbol set, wherein the sending power of the first signal depends on the first power value; the first signal has a spatial relation with the at least one reference signal resource; and whether the first power value is the first candidate power value or the second candidate power value depends on whether the first symbol set is for downlink.

As an embodiment, the first communication device 410 comprises: a memory for storing a computer-readable instruction program, the computer-readable instruction program generates actions when executed by at least one processor, and the actions comprise: sending target signaling and first signaling; and receiving a first signal in the first symbol set.

As an embodiment, the first node in the present application comprises the second communication device 450.

As an embodiment, the second node in the present application comprises the first communication device 410.

As an embodiment, at least one of {the antenna 420, the transmitting device 418, the transmitting processor 416, the multi-antenna transmitting processor 471, the controller/processor 475, and the memory 476} is used for sending the target signaling; and at least one of {the antenna 452, the receiving device 454, the receiving processor 456, the multi-antenna receiving processor 458, the controller/processor 459, the memory 460, and the data source 467} is used for receiving the target signaling.

As an embodiment, at least one of {the antenna 420, the transmitting device 418, the transmitting processor 416, the multi-antenna transmitting processor 471, the controller/processor 475, and the memory 476} is used for sending the first signaling; and at least one of {the antenna 452, the receiving device 454, the receiving processor 456, the multi-antenna receiving processor 458, the controller/processor 459, the memory 460, and the data source 467} is used for receiving the first signaling.

As an embodiment, at least one of {the antenna 452, the transmitting device 454, the transmitting processor 468, the multi-antenna transmitting processor 457, the controller/processor 459, the memory 460 and the data source 467} is used for sending the first signal in the first symbol set; and at least one of {the antenna 420, the receiving device 418, the receiving processor 470, the multi-antenna receiving processor 472, the controller/processor 475, and the memory 476} is used for receiving the first signal in the first symbol set.

### Embodiment 5

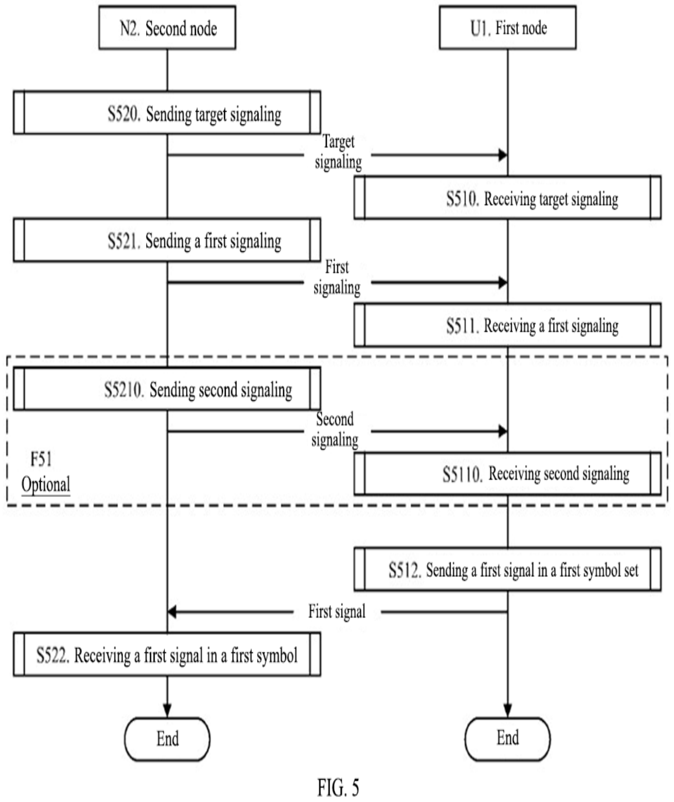

Embodiment 5 illustrates a flow chart of transmission between a first node and a second node according to an embodiment of the present application. In FIG. 5, the first node U1 is in communication with the second node N2 by a radio link, and the step in block 51 is optional. It is particularly noted that the order in the embodiment does not limit the signal transmission order and the implementation order in the present application.

For **the first node U1,** in step S510, the target signaling is received; in step S511, the first signaling is received; in step S5110, the second signaling is received; and in step S512, the first signal is sent in the first symbol set.

For **the second node N2**, in step S520, the target signaling is sent; in step S521, the first signaling is sent; in step S5210, the second signaling is sent; and in step S522, the first signal is sent in the first symbol set.

In embodiment 5, the target signaling indicates a first symbol set; and the first signaling comprises a first field, the first field of the first signaling indicates at least one reference signal resource and a first power value, and the first power value is one of a first candidate power value and a second candidate power value; and the sending power of the first signal depends on the first power value; the first signal has a spatial relation with the at least one reference signal resource; and whether the first power value is the first candidate power value or the second candidate power value depends on whether the first symbol set is for downlink.

As an embodiment, the first node U1 is the first node in the present application.

As an embodiment, the second node N2 is the second node in the present application.

As an embodiment, an air interface between the second node N2 and the first node U1 comprises a radio interface between a base station device and a user equipment.

As an embodiment, the air interface between the second node N2 and the first node U1 comprises a radio interface between a relay node device and a user equipment.

As an embodiment, the air interface between the second node N2 and the first node U1 comprises a radio interface between a user equipment and a user equipment.

As an embodiment, the second node N2 is a maintenance base station of a serving cell of the first node U1.

As an embodiment, the step in block F51 in FIG. 5 exists; and the method applied to the first node U1 in the present application comprises: receiving second signaling.

As an embodiment, the second signaling comprises a second field, the second field of the second signaling indicates a first offset value, and the sending power of the first signal depends on the first offset value; and the first offset value depends on whether the first symbol set is for downlink.

As an embodiment, the second signaling comprises DCI.

As an embodiment, a DCI format used by the second signaling is DCI format 2_2.

As an embodiment, the CRC of the second signaling is scrambled by a Transmit Power Control (TPC)-PUSCH-RNTI.

As an embodiment, the second field comprised in the second signaling comprises a Closed loop indicator field in the DCI.

As an embodiment, the second field comprised in the second signaling comprises a TPC command field in the DCI.

As an embodiment, the unit of the first offset value is deciBel (dB).

As an embodiment, the first signal is transmitted on a BandWidth Part (BWP) *b* of a carrier *f* of a serving cell c in a transmission occasion *i.*

As an embodiment, the first signal is transmitted on a BWP *b* of a carrier *f* of a serving cell c in a transmission occasion *i* by using a parameter set configuration with an index of *j.*

As an embodiment, the first signal is transmitted on a BWP *b* of a carrier *f* of a serving cell c in a transmission occasion *i* by using a power control adjustment state with an index of *l*.

As a sub-embodiment of the above three embodiments, the carrier *f* is a UL carrier.

As a sub-embodiment of the above three embodiments, the carrier *f* is a DL carrier.

As a sub-embodiment of the above three embodiments, the BWP *b* is a UL BWP *b.*

As a sub-embodiment of the above three embodiments, the BWP *b* is a DL BWP *b.*

As an embodiment, the first offset value is used for determining the power control adjustment state.

As an embodiment, the first offset value is used for determining *f_{b,f,c}*(*i, l*) in TS 38.213.

As an embodiment, the sending power of the first signal is equal to a smaller value of a target power value and the upper limit value of the first power in the present application, and the target power value depends on the first power value.

As a sub-embodiment of the embodiment, the target power value is linearly correlated with the first offset value.

As an embodiment, when the first symbol set is for downlink, the second field of the second signaling indicates the first offset value from a first offset value set; when the first symbol set is not for downlink, the second field of the second signaling indicates the first offset value from a second offset value set; and the first offset value set is different from the second offset value set.

As a sub-embodiment of the embodiment, the first offset value set comprises 4 offset values.

As a sub-embodiment of the embodiment, the second offset value set comprises 4 offset values.

As an embodiment, when the first symbol set is for downlink, the first offset value is equal to 0; and when the first symbol set is not for downlink, the second field of the second signaling indicates the first offset value from a third offset value set.

As a sub-embodiment of the embodiment, the third offset value set comprises 4 offset values.

As an embodiment, when the first symbol set is for downlink, the second field of the second signaling is not valid; when the first symbol set is not for downlink, the second field of the second signaling indicates the first offset value from a third offset value set.

As a sub-embodiment of the embodiment, the third offset value set comprises 4 offset values.

As an embodiment, the step in block F51 in FIG. 5 does not exist.

As an embodiment, the target signaling is transmitted on a downlink physical control channel (i.e., a downlink channel that can only be used for bearing physical layer control signaling).

As an embodiment, a physical layer channel occupied by the target signaling comprises a Physical Downlink Control Channel (PDCCH).

As an embodiment, the target signaling is transmitted on a downlink physical data channel (i.e., a downlink channel that can be used for bearing physical layer data).

As an embodiment, the physical layer channel occupied by the target signaling comprises a Physical Downlink Shared Channel (PDSCH).

As an embodiment, the first signaling is transmitted on a downlink physical control channel (i.e., a downlink channel that can only be used for bearing physical layer control signaling).

As an embodiment, the physical layer channel occupied by the first signaling comprises a PDCCH.

As an embodiment, the first signaling is transmitted on a downlink physical data channel (i.e., a downlink channel that can be used for bearing physical layer data).

As an embodiment, the physical layer channel occupied by the first signaling comprises a PDSCH.

As an embodiment, the second signaling is transmitted on a downlink physical control channel (i.e., a downlink channel that can only be used for bearing physical layer control signaling).

As an embodiment, the physical layer channel occupied by the second signaling comprises a PDCCH.

As an embodiment, the first signal is transmitted on an uplink physical control channel (i.e., an uplink channel that can only be used for bearing physical layer control signaling).

As an embodiment, the physical layer channel occupied by the first signal comprises a Physical Uplink Control Channel (PUCCH).

As an embodiment, the first signal is transmitted on an uplink physical data channel (i.e., an uplink channel that can be used for bearing physical layer data).

As an embodiment, the physical layer channel occupied by the first signal comprises a PUSCH.

As an embodiment, a transmission channel corresponding to the first signal comprises an UpLink-Shared Channel (UL-SCH).

### Embodiment 6

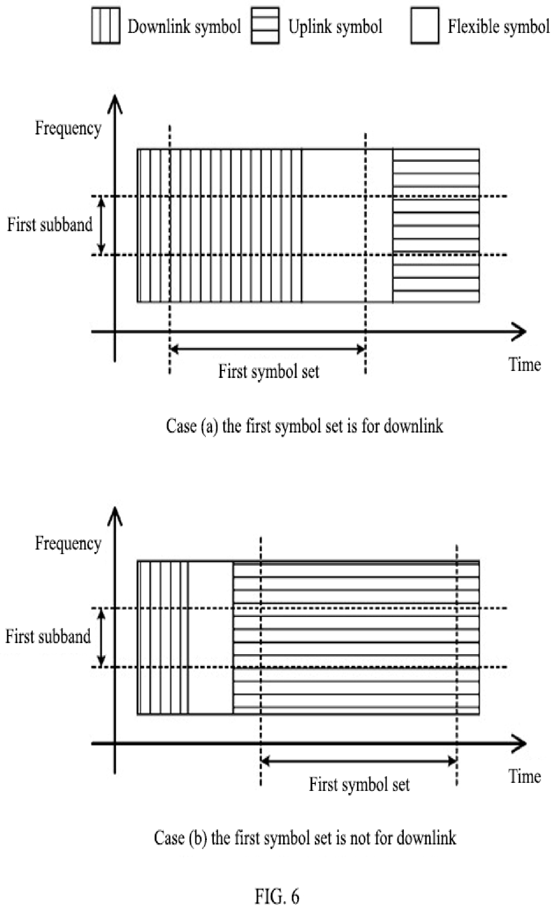

Embodiment 6 illustrates a schematic diagram of two cases of whether a first symbol set is for downlink according to an embodiment of the present application, as shown in FIG. 6. In FIG. 6, a horizontal axis represents time and a vertical axis represents frequency; and an area filled with vertical lines represents time domain resources occupied by the downlink symbols in terms of time, an area filled with horizontal lines represents time domain resources occupied by the uplink symbols in terms of time, an unfilled area represents time domain resource occupied by flexible symbols in terms of time, and an area occupied by a first subband represents frequency domain resources that can be used for uplink transmission in the downlink symbols and the flexible symbols in terms of frequency.

In embodiment 6, case (a) indicates that the first symbol set is for downlink, and the frequency resources occupied by the first signal belong to the first subband; and case (b) indicates that the first symbol set is not for downlink.

As an embodiment, the frequency domain resources occupied by the first signal belong to the first subband.

As an embodiment, the first subband occupies at least one Resource Block (RB) set (RB set) in the frequency domain.

As a sub-embodiment of the embodiment, the RB set comprises a group of consecutive RBs.

As a sub-embodiment of the embodiment, the RB set is configured by a higher layer parameter *"IntraCellGuardBandsPerSCS".*

As a sub-embodiment of the embodiment, the RB set is configured by a higher layer parameter *"intraCellGuardBandsUL-List".*

As a sub-embodiment of the embodiment, a guard band exists between the two adjacent RB sets.

As an embodiment, the first subband has guard bands on both sides of the frequency domain.

As an embodiment, the first subband has a guard band on one side of the frequency domain.

As an embodiment, the first subband has no guard band on both sides of the frequency domain.

As a sub-embodiment of the above three embodiments, the guard band is not used for uplink transmission or downlink transmission.

As an embodiment, the first subband comprises a guard band.

As an embodiment, the first subband does not comprise a guard band.

As an embodiment, the first subband occupies at least one RB in the frequency domain.

As a sub-embodiment of the embodiment, the at least one RB comprises one RB.

As a sub-embodiment of the embodiment, the at least one RB comprises a plurality of consecutive RBs.

Typically, one RB occupies 12 consecutive subcarriers in the frequency domain.

As an embodiment, the first subband occupies a plurality of subcarriers in the frequency domain.

As an embodiment, the first subband belongs to one UL carrier.

As an embodiment, frequency domain resources occupied by the first subband belong to one UL carrier.

As an embodiment, the UL carrier in the present application comprises a Normal UL (NUL) carrier.

As an embodiment, the UL carrier in the present application comprises a Supplementary UL (SUL) carrier.

As an embodiment, the first subband belongs to one DL carrier.

As an embodiment, frequency domain resources occupied by the first subband belong to one DL carrier.

As an embodiment, the first subband belongs to one BWP message.

As an embodiment, the first subband belongs to one UL BWP.

As an embodiment, the first frequency domain resources occupied by the first subband belong to one UL BWP.

As an embodiment, the first subband belongs to one DL BWP.

As an embodiment, the first frequency domain resources occupied by the first subband belong to one DL BWP.

As an embodiment, overlapping frequency domain resources exist between the first subband and one UL BWP.

As an embodiment, no overlapping frequency domain resource exists between the first subband and one UL BWP.

As an embodiment, the first subband comprises one Subband non-overlapping Full Duplex (SBFD) subband.

As an embodiment, the first subband is one SBFD subband.

As an embodiment, the frequency domain resources occupied by the first subband comprise the frequency domain resources occupied by one SBFD subband.

As an embodiment, the frequency domain resources occupied by the first subband overlap with the frequency domain resources occupied by one SBFD subband.

As an embodiment, the frequency domain resources occupied by the first subband comprise part or all of frequency domain resources occupied by one SBFD subband.

As an embodiment, the frequency domain resources occupied by the first subband comprise the frequency domain resources other than the frequency domain resources occupied by one SBFD subband.

As an embodiment, the SBFD subband in the present application is used for uplink transmission.

As an embodiment, the SBFD subband in the present application can be used for uplink transmission.

As an embodiment, the SBFD subband in the present application is a UL subband.

As an embodiment, the first subband is configured through RRC signaling.

As an embodiment, the first subband is configured through cell-common RRC signaling.

As an embodiment, the first subband is configured through UE-group common RRC signaling.

As an embodiment, the first subband is configured through the target signaling.

As an embodiment, the frequency domain resources occupied by the first signal belong to one UL BWP.

As an embodiment, the first symbol set is for downlink, and the frequency domain resources occupied by the first signal belong to the first subband.

As an embodiment, the first symbol set is not for downlink, and the frequency domain resources occupied by the first signal belong to one UL BWP.

As an embodiment, the frequency domain resources occupied by the first signal belong to overlapping frequency domain resources between the first subband and one UL BWP.

As an embodiment, the meaning of the feature "the first symbol set is for downlink" comprises: the first symbol set comprises at least one symbol configured as downlink by RRC signaling.

As an embodiment, the meaning of the feature "the first symbol set is for downlink" comprises: the first symbol set comprises at least one symbol configured as downlink by TDD uplink and downlink configuration signaling.

As an embodiment, the meaning of the feature "the first symbol set is for downlink" comprises: all symbols comprised in the first symbol set are symbols configured as downlink by RRC signaling.

As an embodiment, the meaning of the feature "the first symbol set is for downlink" comprises: all symbols comprised in the first symbol set are symbols configured as downlink by TDD uplink and downlink configuration signaling.

As an embodiment, the meaning of the feature "the first symbol set is for downlink" comprises: the first symbol set comprises at least one symbol indicated as downlink by Slot Format Indication (SFI).

As an embodiment, the meaning of the feature "the first symbol set is for downlink" comprises: all symbols comprised in the first symbol set are symbols indicated as downlink by SFI.

As an embodiment, the meaning of the feature "the first symbol set is for downlink" comprises: the first symbol set comprises at least one symbol configured as flexible by RRC signaling and indicated as downlink by DCI.

As an embodiment, the meaning of the feature "the first symbol set is for downlink" comprises: the first symbol set comprises at least one symbol configured as flexible by TDD uplink and downlink configuration signaling and indicated as downlink by DCI.

As an embodiment, the meaning of the feature "the first symbol set is for downlink" comprises: all symbols comprised in the first symbol set are symbols configured as flexible by RRC signaling and indicated as downlink by DCI.

As an embodiment, the meaning of the feature "the first symbol set is for downlink" comprises: all symbols comprised in the first symbol set are symbols configured as flexible by TDD uplink and downlink configuration signaling and indicated as downlink by DCI.

As an embodiment, the meaning of the feature "the first symbol set is for downlink" comprises: a sender of the target signaling receives and sends signals simultaneously on at least one symbol in the first symbol set.

As an embodiment, the meaning of the feature "the first symbol set is for downlink" comprises: a sender of the target signaling simultaneously performs uplink reception and downlink transmission on at least one symbol in the first symbol set.

As an embodiment, the meaning of the feature "the first symbol set is for downlink" comprises: a sender of the target signaling receives and sends signals simultaneously on all symbols in the first symbol set.

As an embodiment, the meaning of the feature "the first symbol set is for downlink" comprises: a sender of the target signaling simultaneously performs uplink reception and downlink transmission on all symbols in the first symbol set.

As an embodiment, the meaning of the feature "the first symbol set is for downlink" comprises: the first symbol set comprises at least one full duplex symbol.

As an embodiment, the meaning of the feature "the first symbol set is for downlink" comprises: all symbols comprised in the first symbol set are full duplex symbols.

As an embodiment, the meaning of the feature "the first symbol set is for downlink" comprises: the first symbol set comprises at least one SBFD symbol.

As an embodiment, the meaning of the feature "the first symbol set is for downlink" comprises: all symbols comprised in the first symbol set are SBFD symbols.

As an embodiment, the meaning of the feature "the first symbol set is not for downlink" comprises: all symbols comprised in the first symbol set are symbols configured as uplink by RRC signaling.

As an embodiment, the meaning of the feature "the first symbol set is not for downlink" comprises: all symbols comprised in the first symbol set are symbols configured as uplink by TDD uplink and downlink configuration signaling.

As an embodiment, the meaning of the feature "the first symbol set is not for downlink" comprises: all symbols comprised in the first symbol set are symbols indicated as uplink by SFI.

As an embodiment, the meaning of the feature "the first symbol set is not for downlink" comprises: all symbols comprised in the first symbol set are symbols configured as flexible by RRC signaling and indicated as uplink by DCI.

As an embodiment, the meaning of the feature "the first symbol set is not for downlink" comprises: all symbols comprised in the first symbol set are symbols configured as flexible by TDD uplink and downlink configuration signaling and indicated as uplink by DCI.

As an embodiment, the meaning of the feature "the first symbol set is not for downlink" comprises: a sender of the target signaling only receives signals on all symbols in the first symbol set.

As an embodiment, the meaning of the feature "the first symbol set is not for downlink" comprises: a sender of the target signaling only performs uplink reception on all symbols in the first symbol set.

As an embodiment, the meaning of the feature "the first symbol set is not for downlink" comprises: the first symbol set does not comprise full duplex symbols.

As an embodiment, the meaning of the feature "the first symbol set is not for downlink" comprises: all symbols comprised in the first symbol set are symbols other than full duplex symbols.

As an embodiment, the meaning of the feature "the first symbol set is not for downlink" comprises: the first symbol set does not comprise SBFD symbols.

As an embodiment, the meaning of the feature "the first symbol set is not for downlink" comprises: all symbols comprised in the first symbol set are symbols other than SBFD symbols.

### Embodiment 7

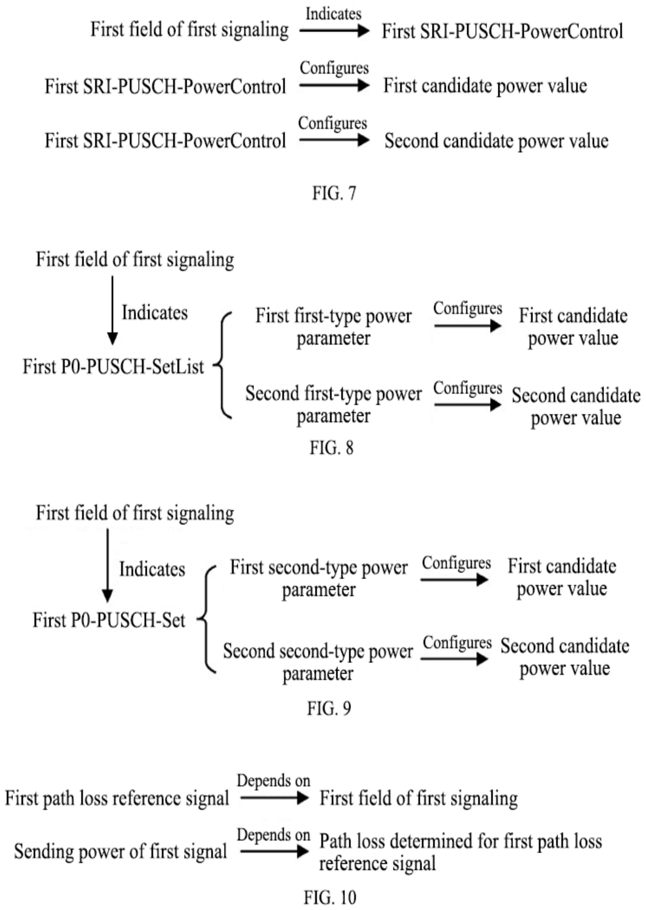

Embodiment 7 illustrates a first schematic diagram in which a first field of first signaling indicates a first power value according to an embodiment of the present application, as shown in FIG. 7. In FIG. 7, the first field of the first signaling indicates a first *SRI-PUSCH-PowerControl,* and the first candidate power value and the second candidate power value are configured by the first *SRI-PUSCH-PowerControl.*

As an embodiment, the first *SRI-PUSCH-PowerControl* is an *SRI-PUSCH-PowerControl* IE.

As an embodiment, the first *SRI-PUSCH-PowerControl* is an *SRI-PUSCH-PowerControl-r18* IE.

As an embodiment, the first *SRI-PUSCH-PowerControl* is an *SRI-PUSCH-PowerControl* field.

As an embodiment, the first *SRI-PUSCH-PowerControl* is an *SRI-PUSCH-PowerControl-r18* field.

As an embodiment, the first *SRI-PUSCH-PowerControl* is carried by the *sri-PUSCH-MappingToAddModList* field in the *PUSCH-PowerControl* IE.

As an embodiment, the first *SRI-PUSCH-PowerControl* is carried by the *sri-PUSCH-MappingToAddModList2-r17* field in the *PUSCH-PowerControl-v1610* IE.

As an embodiment, the first field of the first signaling indicates a first value, the first value is used for determining a first index, and the first *SRI-PUSCH-PowerControl* is identified by the first index.

As a sub-embodiment of the embodiment, the first index is *sri-PUSCH-PowerControlId.*

As a sub-embodiment of the embodiment, the first index is *sri-PUSCH-PowerControlId-r18.*

As an embodiment, a value of *P0-PUSCH-AlphaSetId* comprised in the first *SRI-PUSCH-PowerControl* is mapped to an SRS Resource Indicator (SRI) value indicated through the first field of the first signaling.

As an embodiment, the first *SRI-PUSCH-PowerControl* comprises the first candidate power value and the second candidate power value.

As an embodiment, a value of *P0-PUSCH-AlphaSetId* comprised in the first *SRI-PUSCH-PowerControl* is associated with a first *P0-PUSCH-AlphaSet,* and the first *P0-PUSCH-AlphaSet* comprises the first candidate power value and the second candidate power value.

As a sub-embodiment of the embodiment, the first *P0-PUSCH-AlphaSet* is a *P0-PUSCH-AlphaSet* field.

As a sub-embodiment of the embodiment, the first *P0-PUSCH-AlphaSet* is a *P0-PUSCH-AlphaSet-r18* field.

### Embodiment 8

Embodiment 8 illustrates a second schematic diagram in which a first field of first signaling indicates a first power value according to an embodiment of the present application, as shown in FIG. 8. In FIG. 8, the first field of the first signaling indicates a first *P0-PUSCH-SetList,* and the first candidate power value and the second candidate power value are configured by two first-type power parameters in the first *P0-PUSCH-SetList* respectively.

As an embodiment, the first *P0-PUSCH-SetList* is a *P0-PUSCH-SetList-r16* field.

As an embodiment, the first *P0-PUSCH-SetList* is a *P0-PUSCH-SetList-r18* field.

As an embodiment, the first *P0-PUSCH-SetList* is a *P0-PUSCH-SetList-SBFD* field.

As an embodiment, the first signaling is DCI, the DCI comprises a third field, and the third field is an open-loop power control parameter set indication field.

As a sub-embodiment of the embodiment, the third field is set as "1".

As a sub-embodiment of the embodiment, the third field is set as "01".

As a sub-embodiment of the embodiment, the third field is set as "10".

As a sub-embodiment of the embodiment, the third field is set as "11".

As an embodiment, the two first-type power parameters are two power parameter sets respectively, the two power parameter sets are a first power parameter set and a second power parameter set respectively, and the two power parameter sets comprise at least one power parameter respectively.

As a sub-embodiment of the embodiment, the first power parameter set comprises 1 candidate power value, and the 1 candidate power value is the first candidate power value.

As a sub-embodiment of the embodiment, the second power parameter set comprises 1 candidate power value, and the 1 candidate power value is the second candidate power value.

As a sub-embodiment of the embodiment, the first power parameter set comprises 2 candidate power values, and one of the 2 candidate power values is the first candidate power value.

As a sub-embodiment of the embodiment, the second power parameter set comprises 2 candidate power values, and one of the 2 candidate power values is the second candidate power value.

As a sub-embodiment of the above two embodiments, the third field of the first signaling is used for determining the first candidate power value and the second candidate power value from the 2 power parameter sets respectively.

As an embodiment, the two first-type power parameters correspond to two *P0-PUSCH-Set* respectively.

As an embodiment, the two first-type power parameters correspond to two *P0-PUSCH-Set-r16* respectively.

As an embodiment, the two first-type power parameters correspond to two *P0-PUSCH-Set-r18* respectively.

As an embodiment, the two first-type power parameters correspond to a *P0-PUSCH-Set-r16* and a *PC-PUSCH-Set-r18* respectively.

### Embodiment 9

Embodiment 9 illustrates a third schematic diagram in which a first field of first signaling indicates a first power value according to an embodiment of the present application, as shown in FIG. 9. In FIG. 9, the first field of the first signaling indicates a first *P0-PUSCH-Set,* and the first candidate power value and the second candidate power value are configured by two second-type power parameters in the first *P0-PUSCH-Set* respectively.

As an embodiment, the first *P0-PUSCH-set* is a *P0-PUSCH-set-r16* field.

As an embodiment, the first *P0-PUSCH-set* is a *P0-PUSCH-set-r18* field.

As an embodiment, the first *P0-PUSCH-set* is a *P0-PUSCH-set-SBFD* field.

As an embodiment, the first field of the first signaling indicates the first *P0-PUSCH-Set* from a plurality of second-type *P0-PUSCH-Set.*

As a sub-embodiment of the embodiment, the second-type *P0-PUSCH-Set* is a *P0-PUSCH-set-r16.*

As a sub-embodiment of the embodiment, the second-type *P0-PUSCH-Set* is a *P0-PUSCH-set-r18.*

As a sub-embodiment of the embodiment, the second-type *P0-PUSCH-Set* is a *P0-PUSCH-set-SBFD.*

As a sub-embodiment of the embodiment, the *p0-PUSCH-SetId* value of the first *P0-PUSCH-set* is mapped to the value of the first field of the first signaling.

As an embodiment, the first signaling is DCI, the DCI comprises a third field, and the third field is an open-loop power control parameter set indication field.

As a sub-embodiment of the embodiment, the third field is set as "1".

As a sub-embodiment of the embodiment, the third field is set as "01".

As a sub-embodiment of the embodiment, the third field is set as "10".

As a sub-embodiment of the embodiment, the third field is set as "11".

As an embodiment, the first field of the signaling indicates a first value, the first value is used for determining a first index, and the first *P0-PUSCH-set-SBFD* is identified by the first index.

As a sub-embodiment of the embodiment, the first index is *p0-PUSCH-SetId.*

As a sub-embodiment of the embodiment, the first index is *p0-PUSCH-SetId-r18.*

As an embodiment, the two second-type power parameters are two *P0-PUSCH-r16* fields respectively.

As an embodiment, the two second-type power parameters are two *P0-PUSCH-r18* fields respectively.

As an embodiment, the two second-type power parameters are a *P0-PUSCH-r16* field and a *P0-PUSCH-r18* field respectively.

### Embodiment 10

Embodiment 10 illustrates a schematic diagram of a relation between a first field of first signaling and a first path loss reference signal according to an embodiment of the present application, as shown in FIG. 10. In FIG. 10, a first path loss reference signal depends on the first field of the first signaling, and the sending power of the first signal depends on path loss determined for the first path loss reference signal.

In embodiment 10, the first path loss reference signal is a first downlink reference signal or a second downlink reference signal; and whether the first path loss reference signal is the first downlink reference signal or the second downlink reference signal depends on whether the first symbol set is for downlink.

As an embodiment, the first path loss reference signal depends on the first field of the first signaling.

As an embodiment, the first field of the first signaling indicates a first value, the first value is mapped to *SRI-PUSCH-PowerControlId* in a first *SRI-PUSCH-PowerControl,* the first *SRI-PUSCH-PowerControl* comprises two *PUSCH-PathlossReferenceRS-Id,* and the two *PUSCH-PathlossReferenceRS-Id* indicate the first downlink reference signal and the second downlink reference signal respectively.

As an embodiment, the first downlink reference signal occupies one CSI-RS resource.

As an embodiment, the first downlink reference signal occupies one SSB.

As an embodiment, the first downlink reference signal occupies one *SSB-Index.*

As an embodiment, the first downlink reference signal occupies one *NZP-CSI-RS-ResourceId.*

As an embodiment, the second downlink reference signal occupies one CSI-RS resource.

As an embodiment, the second downlink reference signal occupies one SSB.

As an embodiment, the second downlink reference signal occupies one *SSB-Index.*

As an embodiment, the second downlink reference signal occupies one *NZP-CSI-RS-ResourceId.*

As an embodiment, the first downlink reference signal and the second downlink reference signal each occupy one CSI-RS resource, and the CSI-RS resources occupied by the first downlink reference signal and the second downlink reference signal are different.

As an embodiment, the first downlink reference signal and the second downlink reference signal each occupy one *NZP-CSI-RS-ResourceId,* and the *NZP-CSI-RS-ResourceId* occupied by the first downlink reference signal and the second downlink reference signal are different.

As an embodiment, the first downlink reference signal and the second downlink reference signal each occupy one SSB, and the SSBs occupied by the first downlink reference signal and the second downlink reference signal are different.

As an embodiment, the first downlink reference signal and the second downlink reference signal each occupy one *SSB-Index,* and the *SSB-Index* occupied by the first downlink reference signal and the second downlink reference signal are different.

As an embodiment, the first downlink reference signal occupies one CSI-RS resource, and the second downlink reference signal occupies one SSB.

As an embodiment, the first downlink reference signal occupies one *NZP-CSI-RS-ResourceId,* and the second downlink reference signal occupies one *SSB-Index.*

As an embodiment, the first downlink reference signal occupies one SSB, and the second downlink reference signal occupies one CSI-RS resource.

As an embodiment, the first downlink reference signal occupies one *SSB-Index,* and the second downlink reference signal occupies one *NZP-CSI-RS-ResourceId.*

As an embodiment, the sending power of the first signal depends on path loss determined for the first path loss signal.

As a sub-embodiment of the embodiment, the measurement for the first path loss reference signal is used for determining the path loss.

As an embodiment, the path loss determined for the first path loss reference signal is equal to the sending power of the first path loss reference signal minus Reference Signal Received Power (RSRP) of the first path loss reference signal.

As an embodiment, the path loss determined for the first path loss reference signal is *PL_{b,f,c}*(*q_{d}*) in TS 38.213.

As an embodiment, the sending power of the first signal is equal to a smaller value of a target power value and the upper limit value of the first power in the present application, and the target power value depends on the path loss determined for the first path loss reference signal.

As a sub-embodiment of the embodiment, the target power value is linearly correlated with the path loss determined for the first path loss reference signal.

As an embodiment, when the first symbol set is for downlink, the first path loss reference signal is the first downlink reference signal; and when the first symbol set is not for downlink, the first path loss reference signal is the second downlink reference signal.

### Embodiment 11

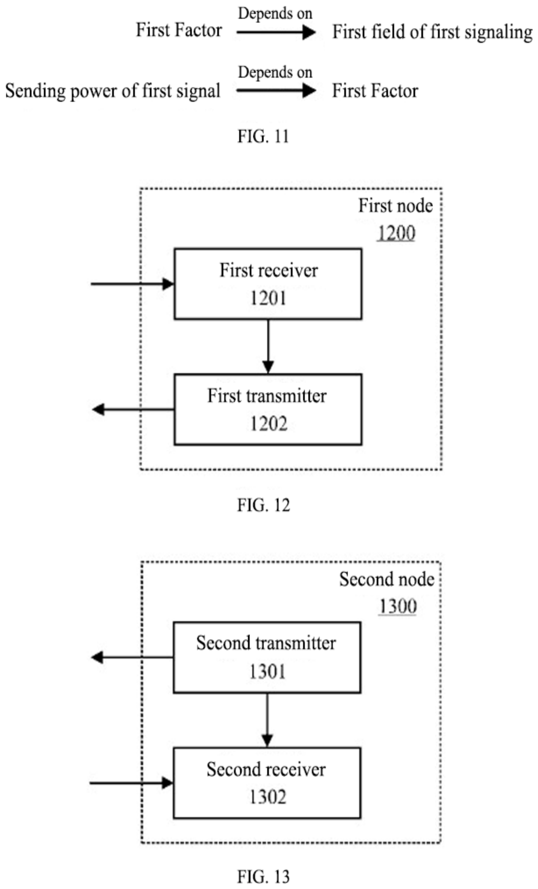

Embodiment 11 illustrates a schematic diagram of a relation between a first field of first signaling and a first factor according to an embodiment of the present application, as shown in FIG. 11. In FIG. 11, the first factor depends on the first field of the first signaling, and the sending power of the first signal depends on the first factor.

In embodiment 11, the first factor is a value between 0 and 1; the first factor is a first candidate factor or a second candidate factor; and whether the first factor is the first candidate factor or the second candidate factor depends on whether the first symbol set is for downlink.

As an embodiment, the first factor depends on the first field of the first signaling.

As an embodiment, the first field of the first signaling indicates a first value, the first value is mapped to *P0-PUSCH-AlphaSetId* in a first *SRI-PUSCH-PowerControl, P0-PUSCH-AlphaSet* corresponding to the *P0-PUSCH-AlphaSetId* comprised in the first *SRI-PUSCH-PowerControl* comprises two *alpha,* and the two *alpha* indicate the first candidate factor and the second candidate factor respectively.

As an embodiment, the first candidate factor is a value between 0 and 1.

As an embodiment, the first candidate factor is equal to 0.

As an embodiment, the first candidate factor is equal to 1.

As an embodiment, the first candidate factor is equal to one of {0, 0.4, 0.5, 0.6, 0.7, 0.8, 0.9, and 1}.

As an embodiment, the second candidate factor is a value between 0 and 1.

As an embodiment, the second candidate factor is equal to 0.

As an embodiment, the second candidate factor is equal to 1.

As an embodiment, the second candidate factor is equal to one of {0, 0.4, 0.5, 0.6, 0.7, 0.8, 0.9, and 1}.

As an embodiment, the first candidate factor is different from the second candidate factor.

As an embodiment, the first factor is *alpha* for uplink power control.

As an embodiment, the first factor is *alpha* for PUSCH power control.

As an embodiment, the first factor is *α_{b,f,c}*(*j*) in TS 38.213.

As an embodiment, the sending power of the first signal is equal to a smaller value of a target power value and an upper limit value of the first power, and the target power value depends on the path loss determined for the first path loss reference signal in the present application and the first factor.

As a sub-embodiment of the embodiment, the target power value is linearly correlated with the product of the path loss determined for the first path loss reference signal in the present application and the first factor.

As a sub-embodiment of the embodiment, a linear coefficient between the target power value and the product of the path loss determined for the first path loss reference signal in the present application and the first factor is equal to 1.

As an embodiment, when the first symbol set is for downlink, the first factor is the first candidate factor; and when the first symbol set is not for downlink, the first factor is the second candidate factor.

### Embodiment 12

Embodiment 12 illustrates a structural block diagram of a processing apparatus used in a first node according to an embodiment of the present application, as shown in FIG. 12. In FIG. 12, the processing apparatus 1200 in the first node comprises a first receiver 1201 and a first transmitter 1202.

In embodiment 12, the first receiver 1201 receives target signaling and first signaling, wherein the target signaling indicates a first symbol set; and the first signaling comprises a first field, the first field of the first signaling indicates at least one reference signal resource and a first power value, and the first power value is one of a first candidate power value and a second candidate power value; and the first transmitter 1202 sends a first signal in the first symbol set.

In embodiment 12, the sending power of the first signal depends on the first power value; the first signal has a spatial relation with the at least one reference signal resource; and whether the first power value is the first candidate power value or the second candidate power value depends on whether the first symbol set is for downlink.

As an embodiment, the first field of the first signaling indicates a first *SRI-PUSCH-PowerControl,* and the first candidate power value and the second candidate power value are configured by the first *SRI-PUSCH-PowerControl.*

As an embodiment, the first field of the first signaling indicates a first *P0-PUSCH-SetList,* and the first candidate power value and the second candidate power value are respectively configured by two first-type power parameters in the first *P0-PUSCH-SetList.*

As an embodiment, the first field of the first signaling indicates a first *P0-PUSCH-Set,* and the first candidate power value and the second candidate power value are respectively configured by two second-type power parameters in the first *P0-PUSCH-Set.*

As an embodiment, the first receiver 1201 receives second signaling, wherein the second signaling comprises a second field, the second field of the second signaling indicates a first offset value, the sending power of the first signal depends on the first offset value, and the first offset value depends on whether the first symbol set is for downlink.

As an embodiment, a first path loss reference signal depends on the first field of the first signaling, and the sending power of the first signal depends on path loss determined for the first path loss reference signal; the first path loss reference signal is a first downlink reference signal or a second downlink reference signal; and whether the first path loss reference signal is the first downlink reference signal or the second downlink reference signal depends on whether the first symbol set is for downlink.

As an embodiment, the first factor depends on the first field of the first signaling, and the sending power of the first signal depends on the first factor; the first factor is a value between 0 and 1; the first factor is a first candidate factor or a second candidate factor; and whether the first factor is the first candidate factor or the second candidate factor depends on whether the first symbol set is for downlink.

As an embodiment, the two first-type power parameters correspond to a *P0-PUSCH-Set-r16* and a *P0-PUSCH-Set-r18* respectively.

As an embodiment, the two second-type power parameters are *a P0-PUSCH-r16* field and a *P0-PUSCH-r18* field respectively.

As an embodiment, when the first symbol set is for downlink, the first power value is the first candidate power value; and when the first symbol set is not for downlink, the first power value is the second candidate power value.

As an embodiment, when the first symbol set is for downlink, the first path loss reference signal is the first downlink reference signal; and when the first symbol set is not for downlink, the first path loss reference signal is the second downlink reference signal.

As an embodiment, when the first symbol set is for downlink, the first factor is the first candidate factor; and when the first symbol set is not for downlink, the first factor is the second candidate factor.

As an embodiment, the frequency domain resources occupied by the first signal belong to a first subband; the first subband belongs to one SBFD subband; and the SBFD subband can be used for uplink transmission.

As an embodiment, the first candidate power value and the second candidate power value are configured by RRC; and the benefits of the method comprise: flexible configuration, which is beneficial for adapting to different interference environments.

As an embodiment, the first candidate power value is equal to the sum of the second candidate power value and a given offset value.

As an embodiment, the first candidate power value is equal to a difference obtained by subtracting the given offset value from the second candidate power value.

As a sub-embodiment of the above two embodiments, the second candidate power value is configured through RRC; the given offset value is fixed, or the given offset value is predefined; and the benefits of the method comprise: easy implementation and saving of signaling overhead.

As a sub-embodiment of the above two embodiments, the second candidate power value is configured through RRC; the given offset value is configured through RRC; and the benefits of the method comprise: flexible configuration, which is beneficial for adapting to different interference environments.

As an embodiment, the first node is a user equipment.

As an embodiment, the first node is a relay node device.

As an embodiment, the first receiver 1201 comprises at least one of {the antenna 452, the receiving device 454, the receiving processor 456, the multi-antenna receiving processor 458, the controller/processor 459, the memory 460, and the data source 467} in embodiment 4.

As an embodiment, the first transmitter 1202 comprises at least one of {the antenna 452, the transmitting device 454, the transmitting processor 468, the multi-antenna transmitting processor 457, the controller/processor 459, the memory 460, and the data source 467} in embodiment 4.

### Embodiment 13

Embodiment 13 illustrates a structural block diagram of a processing apparatus used in a second node according to an embodiment of the present application, as shown in FIG. 13. In FIG. 13, the processing apparatus 1300 in the second node comprises a second transmitter 1301 and a second receiver 1302.

In embodiment 13, the first transmitter 1301 sends target signaling and first signaling, wherein the target signaling indicates a first symbol set; and the first signaling comprises a first field, the first field of the first signaling indicates at least one reference signal resource and a first power value, and the first power value is one of a first candidate power value and a second candidate power value; and the second receiver 1302 receives a first signal in the first symbol set.

In embodiment 13, the sending power of the first signal depends on the first power value; the first signal has a spatial relation with the at least one reference signal resource; and whether the first power value is the first candidate power value or the second candidate power value depends on whether the first symbol set is for downlink.

As an embodiment, the first field of the first signaling indicates a first *SRI-PUSCH-PowerControl,* and the first candidate power value and the second candidate power value are configured by the first *SRI-PUSCH-PowerControl.*

As an embodiment, the first field of the first signaling indicates a first *P0-PUSCH-SetList,* and the first candidate power value and the second candidate power value are respectively configured by two first-type power parameters in the first *PC-PUSCH-SetList.*

As an embodiment, the first field of the first signaling indicates a first *PO-PUSCH-Set,* and the first candidate power value and the second candidate power value are respectively configured by two second-type power parameters in the first *PC-PUSCH-Set.*

As an embodiment, the second transmitter 1301 sends second signaling, wherein the second signaling comprises a second field, the second field of the second signaling indicates a first offset value, the sending power of the first signal depends on the first offset value, and the first offset value depends on whether the first symbol set is for downlink.

As an embodiment, a first path loss reference signal depends on the first field of the first signaling, and the sending power of the first signal depends on path loss determined for the first path loss reference signal; the first path loss reference signal is a first downlink reference signal or a second downlink reference signal; and whether the first path loss reference signal is the first downlink reference signal or the second downlink reference signal depends on whether the first symbol set is for downlink.

As an embodiment, the first factor depends on the first field of the first signaling, and the sending power of the first signal depends on the first factor; the first factor is a value between 0 and 1; the first factor is a first candidate factor or a second candidate factor; and whether the first factor is the first candidate factor or the second candidate factor depends on whether the first symbol set is for downlink.

As an embodiment, the two first-type power parameters correspond to a *P0-PUSCH-Set-r16* and a *P0-PUSCH-Set-r18* respectively.

As an embodiment, the two second-type power parameters are a *P0-PUSCH-r16* field and a *P0-PUSCH-r18* field respectively.

As an embodiment, when the first symbol set is for downlink, the first power value is the first candidate power value; and when the first symbol set is not for downlink, the first power value is the second candidate power value.

As an embodiment, when the first symbol set is for downlink, the first path loss reference signal is the first downlink reference signal; and when the first symbol set is not for downlink, the first path loss reference signal is the second downlink reference signal.

As an embodiment, when the first symbol set is for downlink, the first factor is the first candidate factor; and when the first symbol set is not for downlink, the first factor is the second candidate factor.

As an embodiment, the frequency domain resources occupied by the first signal belong to a first subband; the first subband belongs to one SBFD subband; and the SBFD subband can be used for uplink transmission.

As an embodiment, the first candidate power value and the second candidate power value are configured by RRC; and the benefits of the method comprise: flexible configuration, which is beneficial for adapting to different interference environments.

As an embodiment, the first candidate power value is equal to the sum of the second candidate power value and a given offset value.

As an embodiment, the first candidate power value is equal to a difference obtained by subtracting the given offset value from the second candidate power value.

As a sub-embodiment of the above two embodiments, the second candidate power value is configured through RRC; the given offset value is fixed, or the given offset value is predefined; and the benefits of the method comprise: easy implementation and saving of signaling overhead.

As a sub-embodiment of the above two embodiments, the second candidate power value is configured through RRC; the given offset value is configured through RRC; and the benefits of the method comprise: flexible configuration, which is beneficial for adapting to different interference environments.

As an embodiment, the second node is a base station device.

As an embodiment, the second node is a user equipment.

As an embodiment, the second node is a relay node device.

As an embodiment, the second transmitter 1301 comprises at least one of {the antenna 420, the transmitting device 418, the transmitting processor 416, the multi-antenna transmitting processor 471, the controller/processor 475, and the memory 476} in embodiment 4.

As an embodiment, the second receiver 1302 comprises at least one of {the antenna 420, the receiving device 418, the receiving processor 470, the multi-antenna receiving processor 472, the controller/processor 475, and the memory 476} in embodiment 4.

Those ordinary skilled in the art can understand that all or part of the steps in the above method can be completed by instructing relevant hardware through a program, and the program can be stored in a computer-readable storage medium, such as a read-only memory, a hard disk or an optical disc. Optionally, all or part of the steps in the above embodiments can also be implemented using one or more integrated circuits. Accordingly, each module element in the above embodiments can be implemented in the form of hardware or implemented in the form of a software function module. The present application is not limited to any specific form of software and hardware combination. The user equipment, the terminals and the UE in the present application include but not limited to UAV, communication modules on UAV, remote-controlled aircraft, aircraft, small aircraft, mobile phones, tablet computers, laptops, vehicle-mounted communication devices, transportation means, vehicles, RSU, wireless sensors, Internet cards, Internet of Things terminals, Radio Frequency Identification (RFID) terminals, Narrow Band Internet of Things (NB-IoT) terminals, Machine Type Communication (MTC) terminals, enhanced MTC (eMTC) terminals, data cards, Internet cards, vehicle-mounted communication devices, low-cost mobile phones, low-cost tablet computers, and other wireless communication devices. The base stations or system devices in the present application comprise, but not limited to, the macro cell base station, the micro cell base station, the pico cell base station, the femtocell, a relay base station, an evolved Node B (eNB), gNB, TRP, Global Navigation Satellite System (GNSS), a relay satellite, a satellite base station, an aerial base station, RSU, UAV, and the test device, such as a transceiver apparatus or a signaling tester and other wireless communication devices that simulate some functions of the base station.

Those skilled in the art should understand that the present invention can be implemented in other specified forms without departing from the core or basic features. Therefore, the embodiments disclosed currently should be regarded as descriptive rather than restrictive in any way. The scope of the invention is determined by the appended claims rather than the preceding description, and all changes within their equivalent meanings and areas are deemed to be included therein.

## Claims

1. A first node for wireless communication, comprising:
a first receiver receiving target signaling and first signaling, wherein the target signaling indicates a first symbol set, and the first signaling comprises a first field, the first field of the first signaling indicating at least one reference signal resource and a first power value, and the first power value being one of a first candidate power value and a second candidate power value; and
a first transmitter sending a first signal in the first symbol set,
wherein a sending power of the first signal depends on the first power value; the first signal has a spatial relationship with the at least one reference signal resource; and whether the first power value is the first candidate power value or the second candidate power value depends on whether the first symbol set is for downlink.

2. The first node according to claim 1, wherein the first field of the first signaling indicates a first *SRI-PUSCH-PowerControl,* and the first candidate power value and the second candidate power value are configured by the first *SRI-PUSCH-PowerControl.*

3. The first node according to claim 1, wherein the first field of the first signaling indicates a first P0-PUSCH-SetList, and the first candidate power value and the second candidate power value are respectively configured by two first-type power parameters in the first *PC-PUSCH-SetList.*

4. The first node according to claim 1, wherein the first field of the first signaling indicates a first *P0-PUSCH-Set,* and the first candidate power value and the second candidate power value are respectively configured by two second-type power parameters in the first *P0-PUSCH-Set.*

5. The first node according to any one of claims 1 to 4, comprising:
the first receiver receiving second signaling,
wherein the second signaling comprises a second field, the second field of the second signaling indicates a first offset value, the sending power of the first signal depends on the first offset value, and the first offset value depends on whether the first symbol set is for downlink.

6. The first node according to any one of claims 1 to 5, wherein a first path loss reference signal depends on the first field of the first signaling, and the sending power of the first signal depends on a path loss determined for the first path loss reference signal; the first path loss reference signal is a first downlink reference signal or a second downlink reference signal; and whether the first path loss reference signal is the first downlink reference signal or the second downlink reference signal depends on whether the first symbol set is for downlink.

7. The first node according to any one of claims 1 to 6, wherein a first factor depends on the first field of the first signaling, and the sending power of the first signal depends on the first factor; the first factor is a value between 0 and 1; the first factor is a first candidate factor or a second candidate factor; and whether the first factor is the first candidate factor or the second candidate factor depends on whether the first symbol set is for downlink.

8. A second node for wireless communication, comprising:
a second transmitter sending target signaling and first signaling, wherein the target signaling indicates a first symbol set, and the first signaling comprises a first field, the first field of the first signaling indicating at least one reference signal resource and a first power value, and the first power value being one of a first candidate power value and a second candidate power value; and
a second receiver receiving a first signal in the first symbol set,
wherein a sending power of the first signal depends on the first power value; the first signal has a spatial relationship with the at least one reference signal resource; and whether the first power value is the first candidate power value or the second candidate power value depends on whether the first symbol set is for downlink.

9. The second node according to claim 8, wherein the first field of the first signaling indicates a first SRI-PUSCH-PowerControl, and the first candidate power value and the second candidate power value are configured by the first SRI-PUSCH-PowerControl.

10. The second node according to claim 8, wherein the first field of the first signaling indicates a first PO-PUSCH-SetList, and the first candidate power value and the second candidate power value are respectively configured by two first-type power parameters in the first P0-PUSCH-SetList.

11. The second node according to claim 8, wherein the first field of the first signaling indicates a first PO-PUSCH-Set, and the first candidate power value and the second candidate power value are respectively configured by two second-type power parameters in the first P0-PUSCH-Set.

12. The second node according to any one of claims 8 to 11, comprising: the second transmitter sending second signaling; wherein the second signaling comprises a second field, the second field of the second signaling indicates a first offset value, the sending power of the first signal depends on the first offset value, and the first offset value depends on whether the first symbol set is for downlink.

13. The second node according to any one of claims 8 to 12, wherein a first path loss reference signal depends on the first field of the first signaling, and the sending power of the first signal depends on a path loss determined for the first path loss reference signal; the first path loss reference signal is a first downlink reference signal or a second downlink reference signal; and whether the first path loss reference signal is the first downlink reference signal or the second downlink reference signal depends on whether the first symbol set is for downlink.

14. The second node according to any one of claims 8 to 13, wherein a first factor depends on the first field of the first signaling, and the sending power of the first signal depends on the first factor; the first factor is a value between 0 and 1; the first factor is a first candidate factor or a second candidate factor; and whether the first factor is the first candidate factor or the second candidate factor depends on whether the first symbol set is for downlink.

15. A method used in a first node for wireless communication, comprising:
receiving target signaling and first signaling, wherein the target signaling indicates a first symbol set, and the first signaling comprises a first field, the first field of the first signaling indicating at least one reference signal resource and a first power value, and the first power value being one of a first candidate power value and a second candidate power value; and
sending a first signal in the first symbol set,
wherein a sending power of the first signal depends on the first power value; the first signal has a spatial relationship with the at least one reference signal resource; and whether the first power value is the first candidate power value or the second candidate power value depends on whether the first symbol set is for downlink.

16. The method according to claim 15, wherein the first field of the first signaling indicates a first SRI-PUSCH-PowerControl, and the first candidate power value and the second candidate power value are configured by the first SRI-PUSCH-PowerControl.

17. The method according to claim 15, wherein the first field of the first signaling indicates a first PO-PUSCH-SetList, and the first candidate power value and the second candidate power value are respectively configured by two first-type power parameters in the first P0-PUSCH-SetList.

18. The method according to claim 15, wherein the first field of the first signaling indicates a first PO-PUSCH-Set, and the first candidate power value and the second candidate power value are respectively configured by two second-type power parameters in the first P0-PUSCH-Set.

19. The method according to any one of claims 15 to 18, comprising: receiving second signaling, wherein the second signaling comprises a second field, the second field of the second signaling indicates a first offset value, the sending power of the first signal depends on the first offset value, and the first offset value depends on whether the first symbol set is for downlink.

20. The method according to any one of claims 15 to 19, wherein a first path loss reference signal depends on the first field of the first signaling, and the sending power of the first signal depends on a path loss determined for the first path loss reference signal; the first path loss reference signal is a first downlink reference signal or a second downlink reference signal; and whether the first path loss reference signal is the first downlink reference signal or the second downlink reference signal depends on whether the first symbol set is for downlink.

21. The method according to any one of claims 15 to 20, wherein a first factor depends on the first field of the first signaling, and the sending power of the first signal depends on the first factor; the first factor is a value between 0 and 1; the first factor is a first candidate factor or a second candidate factor; and whether the first factor is the first candidate factor or the second candidate factor depends on whether the first symbol set is for downlink.

22. A method used in a second node for wireless communication, comprising:
sending target signaling and first signaling, wherein the target signaling indicates a first symbol set, and the first signaling comprises a first field, the first field of the first signaling indicating at least one reference signal resource and a first power value, and the first power value being one of a first candidate power value and a second candidate power value; and
receiving a first signal in the first symbol set,
wherein a sending power of the first signal depends on the first power value; the first signal has a spatial relationship with the at least one reference signal resource; and whether the first power value is the first candidate power value or the second candidate power value depends on whether the first symbol set is for downlink.

23. The method according to claim 22, wherein the first field of the first signaling indicates a first SRI-PUSCH-PowerControl, and the first candidate power value and the second candidate power value are configured by the first SRI-PUSCH-PowerControl.

24. The method according to claim 22, wherein the first field of the first signaling indicates a first PO-PUSCH-SetList, and the first candidate power value and the second candidate power value are respectively configured by two first-type power parameters in the first P0-PUSCH-SetList.

25. The method according to claim 22, wherein the first field of the first signaling indicates a first PO-PUSCH-Set, and the first candidate power value and the second candidate power value are respectively configured by two second-type power parameters in the first P0-PUSCH-Set.

26. The method according to any one of claims 22 to 25, comprising: sending second signaling, wherein the second signaling comprises a second field, the second field of the second signaling indicates a first offset value, the sending power of the first signal depends on the first offset value, and the first offset value depends on whether the first symbol set is for downlink.

27. The method according to any one of claims 22 to 26, wherein a first path loss reference signal depends on the first field of the first signaling, and the sending power of the first signal depends on a path loss determined for the first path loss reference signal; the first path loss reference signal is a first downlink reference signal or a second downlink reference signal; and whether the first path loss reference signal is the first downlink reference signal or the second downlink reference signal depends on whether the first symbol set is for downlink.

28. The method according to any one of claims 22 to 27, wherein a first factor depends on the first field of the first signaling, and the sending power of the first signal depends on the first factor; the first factor is a value between 0 and 1; the first factor is a first candidate factor or a second candidate factor; and whether the first factor is the first candidate factor or the second candidate factor depends on whether the first symbol set is for downlink.
